# EUROPEAN PATENT SPECIFICATION

(11) **EP 2 526 808 B1**
(45) Date of publication and mention of the grant of the patent: **21.10.2015**
(21) Application number: 12180336.5
(22) Date of filing: 16.02.2005
(51) Int. Cl.: A45C 11/00, B65D 75/32, A61F 9/00, B65D 83/00, B65D 83/04, A47F 1/00, B65D 81/05, B65D 75/58, B32B 1/06, A45C 11/04, B32B 3/08, B65D 75/30, B65D 75/42, B65D 77/02, B65D 81/22, B65D 81/32

(54) **Packaging for disposable soft contact lenses**
Verpackung von weichen Einweg-Kontaktlinsen
Conditionnement pour lentilles de contact souples jetables

(30) Priority: 17.02.2004 US 781321; 27.02.2004 US 789961
(43) Date of publication of application: 28.11.2012
(62) Divisional of application: 05708539.1
(73) Proprietor: Menicon Singapore Pte Ltd., Singapore 609925 (SG)
(72) Inventor: Newman, Stephen D., Singapore, SG 469977 (SG)
(74) Representative: Freeman, Jacqueline Carol

(56) References cited:
- WO-A-03/016175
- JP-U- 54 123 232
- US-A- 5 474 169
- US-A- 5 573 108
- US-B1- 6 474 465
- PATENT ABSTRACTS OF JAPAN vol. 1999, no. 3, 31 March 1999 (1999-03-31) -& JP 10, 313928, A, (HOYA CORP), 2 December 1998 (1998-12-02)

## Description

### BACKGROUND

The present invention relates to contact lens packaging and, more particularly, to an improved economic form of package for a contact lens which satisfies lens packaging criteria, including sterility and environmentally sensitive disposability. The invention relates to a package that provides an improved method of orienting and presenting the lens. Also described are methods of removing the lens from the package, and contact lens packages arranged for improved distribution, travel compatibility and/or dispensing.

### PRIOR ART

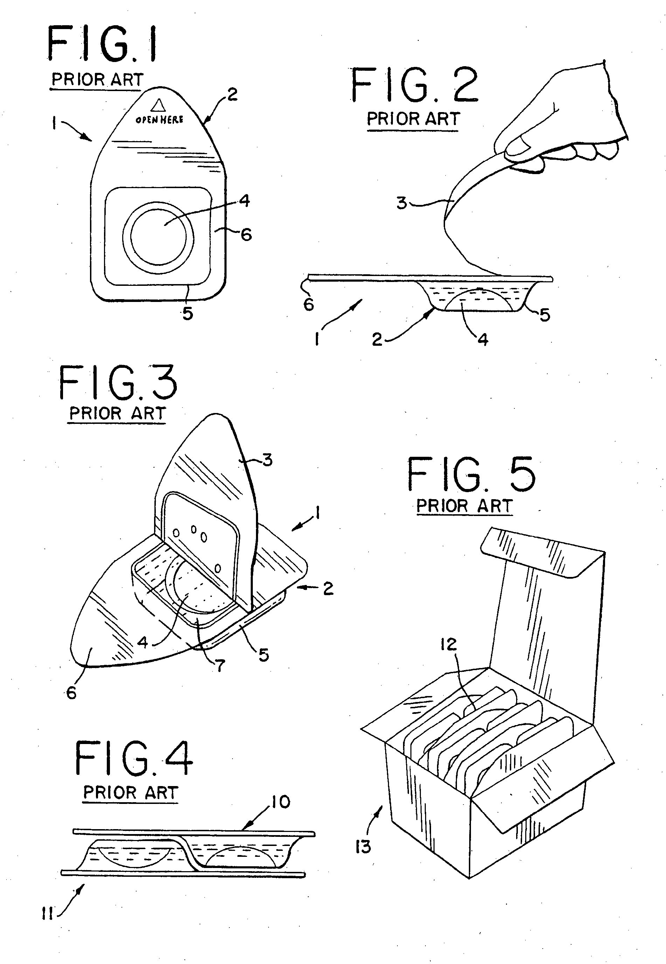

Soft disposable contact lenses are commonly contained in disposable packages. As packaging adds to the overall cost of the lens, it should be made as economically as possible but without compromise to the requisite packaging criteria. The traditional blister pack packaging (shown in Figs. 1-3) for disposable lenses (both bi-weekly and daily) consists of a polypropylene receptacle for the lens (herein after referred to as a "boat"), topped by a multi-layer film consisting of polyethylene, aluminum, a bonding agent and polypropylene. The boat is usually an injection molded plastic which has high stiffness but is capable of limited elastic deflection and includes a preformed recess. The boat is filled with a suitable storage solution, preferably saline, and receives a single lens in situ. The blister pack is then autoclaved using steam and pressure to terminal sterility. These blister packs are presented to the patient in boxes of individual packs (Figs. 4-5) or as multiple blister strips.

The marketing objective is to present the contact lens to a patient in an aesthetically pleasing package that both satisfies the statutory requirements for sterility and stability, and allows the patient to remove the lens safely and easily. The packaging is used only once and is discarded after the lens is removed. This impacts the costs of the lens/package combination. In order to reduce the overall price of the lens to the patient, the cost of the packaging should be kept to an absolute minimum. In addition, disposability of lens packages necessitates conformity with ecological standards.

The lens must be kept hydrated while in the package. The package must be well sealed and should minimize water vapor transmission through the boat and laminated layer to maximize the shelf life and prevent drying out of the lens contained therein. In use, the user removes the laminated material from a flange formed on the boat by peeling back the cover to expose the lens immersed in a hydrating solution.

A variety of contact lens packages, particularly disposable contact lens packages including preformed blister packs, are taught in the prior art. As exemplified in the prior art, conventional wisdom in the contact lens industry has been to provide preformed stiff packaging which protects the lens from damage from applied load. Examples of typical prior art blister packs are shown in: U.S. Patent No. 5,704,468; U.S. Patent No. 4,392,569; U.S. Patent No. 5,620,088; U.S. Patent No. 5,620,088; U.S. Patent No. 4,691,820; U.S. Patent No. 5,823,327; U.S. Patent No. 5,853,085; EP Patent Publication No. 1 092 645 A1; and EP Patent Publication No. 1 092 645. One problem with many blister packs is that the force required to peal off the film layer from the blister has a high peak, followed by a rapid decrease in the amount of force required to open the main part of the seal. This can result in a jerky movement and spilling the contents when the blister is opened.

Flexible retort packages are also known, however, not for use with contact lenses. U.S. Patent No. 4,769,261 discloses a seal layer for use in large institutional sized retort pouches comprising an ABA film structure, wherein the A layers are each composed of a blend of a minor amount of an elastomer and a major amount of a polyolefin and the B layer is composed of a blend of a major amount of an elastomer and a minor amount of polyolefin. Retort pouches made with the A film structure as the seal layer exhibit improved impact strength. There is no teaching in the '261 patent to use a retort package for housing a contact lens.

EP Patent Publication No. 0 129 388 describes a sachet formed by sealing together an optically transparent film so as to enclose a contact lens plus hydration solution. This teaching is however directed at maintaining the contact lens in its natural equilibrium shape so as to allow optical measurement to be conducted without opening the pack. In an additional aspect of this teaching, the sachet is provided with a holder or support within the sachet in which the lens is retained to assist in securing the lens to allow such optical measurements as back surface radius of curvature to be made. It is clear therefore that EP '388 is directed at maintaining a contact lens in its equilibrium shape.

Japanese Patent Publication No. 6-258603 similarly describes a resin film pack for the storage of contact lenses. The package is formed from a suitable resin material by sealing three of the four sided together, leaving the fourth side open to insert the contact lens plus storage solution. Once the lens and solution have been placed within the package, the fourth side is then heat sealed. There is no provision within this teaching for the opening of the package. Since the contact lens is placed into the pre-formed package through its open end, there is no provision for favorably orientating the lens for user convenience.

A package according to the preamble of claim 1 is known from US 5573108.

The prior art contact lens packages thus have a number of disadvantages, which include the following:
1. The packages are relatively expensive for daily disposable packages as they use two types of material, one of which is preformed, thus increasing manufacturing costs. Consumers resist packages which contribute to increased cost of a lens. This will become a greater problem as the daily disposable market grows and becomes more competitive.
2. Prior art packages are traditionally manufactured from two distinctly different materials, one for the boat which houses the lens and another for the cover. This can lead to sealing problems with an attendant risk of compromised sterility. Over time, a poorly sealed blister pack could allow its contents to evaporate and render the pack useless. This could cause stock defects and consequent financial losses to the manufacturer. Correction of such defects would likely entail the recall of potentially affected batches, and would be potentially expensive both financially and in terms of company product quality reputation.
3. A non-sterile lens, due to poor or incomplete package sealing, may expose a patient to the risk of eye infection and subsequent ocular compromise, potentially resulting in litigation.
4. The size of the packaging is a disadvantage as the receptacle is many times larger than the lens itself. As a result of the polypropylene blister component, the individual package is somewhat deeper than the lens from a sagittal perspective, and as such, does not lend itself to a disposable look or convenient stacking due to its shape and size. Therefore, for the traveling consumer, the lenses may prove to be a bulky item.
5. The traditional approach to lens packaging has been to ensure that the original shape of the lens is maintained in the package. This philosophical approach places limitations on package configurations.
6. The retort style packaging as taught in the prior art will also suffer from additional disadvantages. Firstly opening a retort package is typically performed by tearing open the end of the package rather than peeling back the seal area. This clearly presents the risk of tearing the lens. Secondly removal of the contact lens from an opened retort package will involve either inserting the finger into the package to retrieve the lens, (which again may lead to damage) or emptying the entire contents of the package into the hand. Thirdly, there is no provision for orientating the lens within the package to facilitate orientation of the lens for the convenience of the patient.

There is a long felt need in the disposable contact lens industry to provide an economic, space-efficient, and convenient, disposable contact lens package without compromise to durability, sterility and utility of the lens. While some of these needs are met by the packaging for disposable contact lenses disclosed in applicant's prior application PCT/AU02/01105, published as WO 03/016175, further improvements have also been invented and are disclosed herein.

### SUMMARY OF THE INVENTION

The present invention seeks to ameliorate the problems of the prior art packages by providing an alternative and more economical package without compromise to statutory and medical requirements of contact lens packages.

According to the present invention there is provided a single use package with a contact lens therein, according to claim 1.

Preferred embodiments of the invention are according to the dependent claims.

The single-use package, in the preferred embodiments described below, offers a number of advantages over the prior art blister pack concept. First, the single-use package is smaller and slimmer which lends itself to disposability and is ideal for traveling. Additionally, the number of packages in a secondary container may be increased, yet storage space for that secondary package, may be reduced. The single-use package may be composed of foil sheets which stabilize light exposure and prevent oxygen transmission. Further, there is no air in the package, thus ballasted autoclaving is not required. The absence of air in the package likely contributes to lens stability in the package. Thus, the shelf-life of a contact lens in a single-use package may be extended. Overall, the single-use package is a more convenient and cost effective form of packaging.

Conventional wisdom requires a disposable contact lens package to be stiff and preformed with a profiled recess to house the lens therein. The preformed recess in the known packages is intended to ensure that the lens shape is maintained and is not deformed by the package. The preferred single-use package according to certain embodiments of the present invention is contrary to conventional wisdom as it does not maintain the lens in an equilibrated position, but instead holds the lens in a flattened state. The internal depth of the single-use package is less than the overall natural sagittal depth of the contact lens. Further, the single-use package may be flexible and not preformed, and may contribute to adjustments to the shape of the lens in the package. The present invention challenges the long held view that disposable lens packages must be stiff, and for the most part, rigid and capable of elastic deflection under load. Stiffness of the package was previously thought essential to protect the lens. However, if wall stiffness is abandoned as an essential packaging criterion, alternative contact lens packages with significant space economy may be contemplated.

The invention is a single-use package with a contact lens therein, and the package has an internal depth which is less than an overall sagittal depth of the contact lens when the contact lens is in its equilibrated form.

In one embodiment, the invention is a blister package with a molded base, a cover and a contact lens therein, and the overall depth of the blister package is less than the natural sagittal depth of the contact lens therein.

Also described is a method of removing a contact lens from a contact lens package. The method includes the steps of: placing a package with a spring disc and a contact lens on an index finger; pushing the index finger through a center of the spring disc such that the contact lens rests on the tip of the index finger; and placing the contact lens that rests on the index finger into an eye.

The single-use contact lens package may be removably adhered to a card.

Also described is a single use package for retaining a contact lens, with at least one barrier material defining an internal space for holding a contact lens; a medium in the space for maintaining lens hydration; and means to enable release of the lens from said space; where at least one barrier layer is formed from a homogenous, pliable material.

Also described is a single-use package capable of holding a contact lens. The package has two sheets of material; and a support member between the two sheets of material. The two sheets of material are sealed and the lens is confined in the package such that is always maintained in the same orientation inside the package.

Also described is a carton containing at least 90 single-use packages each with a contact lens therein, where each of the packages has an internal depth which is less than the overall sagittal depth of each the contact lens within the package.

In another embodiment, the invention is a single-use package with a contact lens therein, where the package is configured such that when the package is opened, the lens is always oriented in the same position as when it was placed into the package.

Also described is a contact lens package container having a plurality of contact lenses therein. The contact lens packages are dispensed such that as one contact lens package is removed, a next contact lens package to be dispensed is automatically moved into a position to be removed.

Also described is a single-use package with a contact lens therein which comprises two sheets of material sealed together, and at least one of the sheets has printing thereon; and at least one corner that is not sealed so as to serve as an easy-open comer; wherein the contact lens therein is held in a flattened state while the package is sealed and returns to its natural state when the package is opened; and wherein the printing is selected from the group consisting of instructions for use and prescription information.

Also described is a single-use package with a contact lens therein which comprises two sheets of material sealed together; a spring disc between the sheets; and an amount of hydration medium; wherein the lens in maintained in a flattened state while the package is sealed.

Also described is a method of dispensing a single-use contact lens package from a group of packages, the method comprising: providing a dispensing container having a plurality of contact lens packages therein; and removing at least one contact lens package from the dispenser.

Also described is a method for opening a single-use contact lens package having an internal depth that is less than the overall sagittal depth of an equilibrated contact lens therein, the method comprising separating a first barrier layer from a second barrier layer.

Also described is a single-use package capable of holding a contact lens therein. The package has at least one barrier layer of pliable packaging material forming at least first and second opposing surfaces which define an internal package space in which the contact lens is retained; a hydration medium in the space; and means for enabling release of the contact lens from the package; wherein the at least one barrier layer of material is flat and is flexible.

Also described is a set of retort-type single-use packages for holding contact lenses therein. The packages each comprise: at least one layer of pliable package material forming at least first and second opposing surfaces which define an internal package space in which the contact lens is retained; a medium in the space for maintaining lens hydration; wherein the package material is capable of assuming a generally planar configuration; and wherein the set is formed by joining at least two the packages so that a single package may be tom away from an adjacent package via a frangible connection between the packages.

Also described is a retort-type single-use package comprising an internal space for holding a contact lens and a medium for maintaining lens hydration therein is provided.

Also described is a secondary package for a plurality of contact lens packages comprising a container, where the contact lens packages contained therein have an internal depth that is less than the natural sagittal depth of the contact lens therein; and wherein the container is a shape selected from the group consisting of a circle, rectangle, square, triangle, oval and symmetrical, asymmetrical and rounded variations thereof.

Also described is a contact lens package holder sheet, upon which one or more contact lens packages are affixed.

Also described is a single-use contact lens package wherein said package has a convex surface and an opposing concave surface and wherein said package has an internal depth that is less than 3.0 mm.

Also described is a secondary package for a plurality of single-use contact lens packages comprising a container, wherein each of said single-use contact lens packages contained therein comprises a convex surface and an opposite concave surface, and wherein said single-use packages are stacked such that said convex surface of a first package rests upon said convex surface of a second package.

Also described is a single-use generally enveloped shaped package with a soft contact lens therein, the package comprising at least one sheet of material sealed together, the at least one sheet being a multilayer laminate, and wherein the package further comprises a spring disk which is arched in its equilibrated state, the contact lens resting upon the convex side of the spring disk within the package.

Also described is a contact lens package comprising two layers of flexible material sealed together with a peal seal and containing a contact lens and a hydrating medium within a sealed area encompassed by the peal seal, the peal seal being configured such that it includes a lead-in section that results in the peak force required to begin opening the seal to be no more that 150% of the lowest force needed to open the remainder of the seal

Also described is a contact lens travel pack comprising a container with a lid and a base, a plurality of contact lenses packages and a handle.

Also described is a storage case for a plurality of contact lenses comprising a cover, a container for a plurality of contact lenses wherein the container comprises a lift-out insert.

Also described is a dispensing case for a plurality of contact lenses comprising a cylindrical container wherein each of the two ends of the container open to dispense the contact lenses.

Also described is a storage stand for a plurality of contact lens packages comprising a base and a wall extending from the base, wherein the wall comprises a means for the lenses to be attached thereto.

Also described is a storage means for a plurality of contact lenses has a plurality of contact lens holder sheets with a narrow open slot; a plurality of contact lenses attached to the holder sheets; at least one container comprising a base with a narrow open guide and lid with a narrow open slot; and a stand comprising a base and a central extension. The holder sheets are stored within the container and the container slides onto the base.

Also described is a contact lens delivery package comprising an aluminum coated envelope, a plurality of contact lens packages, and nitrogen gas, wherein the envelope is filled with the nitrogen gas prior to sealing.

Also described is a single-use package for retaining a contact lens therein, the package comprising at least one package wall defining an internal space for holding the contact lens; a medium in the space for maintaining lens hydration; means to enable release of the lens from said space; wherein the at least one wall is formed from a homogenous or multi-layer, pliable material.

Also described is a kit of jointed single use pliable retort-type single use packages for each holding a contact lens is provided. Each single-use package is connected to at least one adjacent package.

Also described is a method of producing a disposable contact lens package. The method comprises the steps of taking a single sheet of pliable material; placing the contact lens on a surface of the sheet; dosing the surface of the material with a hydration maintenance medium; folding the material back on itself to define a space in which the contact lens is held; and sealing the envelope so that the contact lens is held in a sealed environment.

Also described is a method of making a single-use package with a contact lens therein, the method comprising the following: placing a spring disc over the contact lens; dosing the spring disc and contact lens with a minimum amount of hydration medium; placing one sheet of material on top of the spring disc and lens and placing one sheet of material on the bottom of the spring disc and contact lens; and sealing the top and bottom sheet of material.

Also described is a method of making a single-use package with a contact lens therein, wherein the package has a depth which is less than the overall sagittal depth of the contact lens, the method comprising the steps of placing the lens and a minimum amount of hydration medium between two sheets; and sealing the sheets together sterilizing the envelope and contents; allowing access to said lens by splitting, peeling or dividing said package along at least one edge.

### BREIF DESCRIPTION OF THE DRAWINGS

Figure 1 is a plan view of a typical prior art disposable blister contact lens package.

Figure 2 is a side elevation of the package of Figure 1 with the lid peeled away to release the contact lens therein.

Figure 3 is a perspective view of the partially opened package of Figure 2.

Figure 4 is a side elevation view showing a stacking arrangement for two identical prior art contact lens packages.

Figure 5 is a perspective view showing a plurality of blister packs stacked as in Figure 4 and contained in a carton.

Figure 6 is a perspective view of a single-use package opened to show embossing on the bottom sheet which has a convex indentation.

Figure 7 is a perspective view of a single-use package like that of Figure 6, but showing embossing on the top sheet which has a concave indentation.

Figure 8 is a cross-sectional view of the single-use package of Figure 6.

Figure 9 is a cross-sectional view of the single-use package of Figure 7.

Figure 10 is an example of embossing that can be used in the packages of Figures 6-9, in an abstract pattern.

Figure 11 is an example of embossing that can be used in the packages of Figures 6-9, in a grid pattern.

Figure 12 is an example of embossing that can be used in the packages of Figures 6-9, with a logo.

Figure 13 is a perspective view of a single-use package made from two dissimilar, transparent materials and illustrating a method of opening the package having a depression which contains the contact lens.

Figure 14 is a perspective view of a single-use package made from two similar, opaque materials and illustrating a method of opening the package having a depression which contains the contact lens.

Figure 15 is a perspective view of a partially opened single-use package constructed with a support member.

Figure 16 is an exploded side view of the single-use package of Figure 15.

Figure 17 is an exploded perspective view of the single-use package of Figure 15.

Figure 18 is an exploded perspective view of the single-use package of Figure 15 with a netting.

Figure 19 is a plan view of the single-use package of Figure 15 showing its tear drop shape.

Figure 20 is a plan view of a single-use package like that of Figure 15 in a figure-eight shape.

Figure 21 is a plan view of a single-use package like that of Figure 15 in an asymmetrical tear drop shape.

Figure 22 is a plan view of a single-use package with a first space for a contact lens having a foil covering and a second space for hydration medium with a cap.

Figure 23 is a plan view of the single-use package of Figure 22 without the cover that encloses the lens.

Figure 24 is a plan view of a tear drop shaped single-use package with a first space for a contact lens having a foil covering and a second space for hydration medium with a cap.

Figure 25 is a plan view of the single-use package of Figure 24 without the cover that encloses the lens.

Figure 26 is a side elevation view of the single-use package of Figure 22 with the cover intact.

Figure 27 is a side elevation view of the single-use package of Figure 22 with the cover partially peeled off.

Figure 28 is a perspective view of the single-use package of Figure 22 showing the cover being peeled off.

Figure 29 is a plan view of a single-use package of the present invention with a first space for a contact lens having a cover and a second space for hydration medium that has a channel to release hydration medium once separated from the single-use package.

Figure 30 is a plan view of the single-use package of Figure 29 with the cover removed.

Figure 31 is a perspective view of the single-use package of Figure 29 showing the cover being partially removed.

Figure 32 is a side elevation view of the single-use package of Figure 29.

Figure 33 is a side elevation view of the single-use package of Figure 29 with the cover partially peeled off.

Figure 34 is a perspective view of the single-use package of Figure 30 showing the first and second space of the single-use package being separated to release the hydration medium.

Figure 35 is a plan view of a single-use package of the present invention with a first space for a contact lens and a second space for hydration medium, both of which have foil covers.

Figure 36 is a plan view of the single-use package of Figure 35 without the cover that encloses the lens.

Figure 37 is a side elevation view of the single-use package of Figure 35 with the cover peeled away from the first space.

Figure 38 is a side elevation view of the single-use package of Figure 35 with the cover removed from both the first and second spaces.

Figure 39 is a side elevation view of the single-use package of Figure 35 with the cover starting to be peeled away from the second space.

Figure 40 is a perspective view of the single-use package of Figure 35 showing the cover being peeled away from either the first or second space.

Figure 41 is a plan view of two single-use packages, each having a first and second space, and connected by a frangible joint.

Figure 42 is a plan view of one of the single-use packages of Figure 41 without the covering.

Figure 43 is a perspective view of one of the single-use packages of Figure 42 showing the cover being peeled away from the first space containing a contact lens.

Figure 44 is a side view of the single-use package of Figure 42 with a contact lens therein with a cover that is intact.

Figure 45 is a side view of the single-use package of Figure 42 with the cover peeled away and the contact lens in its equilibrated state.

Figure 46 is a side view of a prior art blister pack with a contact lens therein that is folded.

Figure 47 is a side view of a prior art blister pack with a contact lens therein that is stuck to the side.

Figure 48 is a side view of a prior art blister pack with a contact lens therein that is inverted.

Figure 49A is an exploded perspective view of a sachet type single-use package.

Figure 49B is a cross-sectional view of the single-use package of Figure 49A.

Figure 50A is an exploded perspective view of a polypropylene and foil type single-use package.

Figure 50B is a cross-sectional view of the single-use package of Figure 50A.

Figure 51A is an exploded perspective view of an all polypropylene type single-use package.

Figure 51B is a cross-sectional view of the single-use package of Figure 51A.

Figure 52 is a side view of the single-use package of the present invention showing the internal depth of the single-use package.

Figure 53 is a plan view of one embodiment of a single-use package with an island-like protuberance upon which the contact lens rests.

Figure 54 is a cross-sectional view of the single-use package of Figure 53 taken along line 54-54 showing the contact lens resting on the island-like protuberance.

Figure 55 is another cross-sectional view of the single-use package of Figure 53 taken along line 55-55 showing the contact lens resting on the island-like protuberance.

Figure 56 is a plan view of a tear shaped polypropylene support member with a cut out in the handle.

Figure 57 is a cross-sectional view of a single-use package with the support member of Figure 56 that is opaque.

Figure 58 is a cross-sectional view similar to that of Figure 57 but with the cover peeled back.

Figure 59 is a plan view of the front of a single-use package containing the support member of Figure 56.

Figure 60 is a plan view of the back of a single-use package containing the support member of Figure 56.

Figure 61 is a plan view of a polypropylene spring disc for use in a single-use package.

Figure 62 is a plan view of another polypropylene spring disc for use in a single-use package.

Figure 63 is a plan view showing the inside of a single-use package containing another polypropylene spring disc and contact lens.

Figure 64 is a cross-sectional view of an alternative single-use package similar to that shown in Figure 63, showing a polypropylene spring disc and a contact lens in a flattened state.

Figure 65 is a plan view of the front of the single-use package of Figure 63 with reliefs within the foil on either side of the single-use package for easy opening.

Figure 66 is a plan view of the back side of the single-use package of Figure 63.

Figure 67 is a cross-sectional view of the single-use package of Figure 63 showing a contact lens and polypropylene spring disc inside a single-use package, in a flattened configuration.

Figure 68 is a cross-sectional view of the single-use package of Figure 63 with the cover beginning to be peeled back and the spring disc and contact lens in an equilibrated state.

Figure 69 is an exploded perspective view illustrating the construction of a single-use package containing another spring disc.

Figure 70A is a plan view of another spring disc.

Figure 70B is a side view of the embodiment of Figure 70A showing the spring disc and contact lens in a flattened state.

Figure 70C is a side view of the embodiment of Figure 70A showing the spring disc and contact lens in an equilibrated state.

Figure 71 is a plan view of another spring disc.

Figure 72 is a plan view of another spring disc.

Figure 73 is a plan view of another spring disc.

Figure 74 is a plan view of another spring disc.

Figure 75 is a plan view of another spring disc.

Figure 76 is a plan view of another spring disc.

Figure 77 is a plan view of another spring disc.

Figure 78 is a plan view of another spring disc.

Figure 79 is a plan view of another spring disc.

Figure 80 is a plan view of another spring disc.

Figure 81 is a plan view of another spring disc.

Figure 82 is a plan view of another spring disc.

Figure 83 is a plan view of another spring disc.

Figure 84 is a plan view of another spring disc.

Figure 85 is a plan view of another spring disc.

Figure 86 is a perspective view of a single-use package with the spring disc of Figure 70A with a contact lens thereon.

Figure 87 is a cross-sectional view of a contact lens and spring disc in a flattened state in a sealed single-use package.

Figure 88 is a cross-sectional view of a contact lens and spring disc in an equilibrated state in a single-use package of Figure 87 with the cover removed.

Figures 89A-E are perspective views of a single-use package with a spring disc and contact lens thereon with an index finger pushing through the spring disc such that the contact lens rests upon the tip of the index finger and the index finger extends through the opening of the single-use package so that the contact lens may be placed in the eye.

Figure 90 is a plan view of a single-use package with an oval shape and a tear notch.

Figure 91 is a plan view of the single-use package of Figure 90 with the cover removed to show the spring disc and contact lens therein.

Figure 92 is a plan view of a single-use package with a rounded rectangle shape and a tear notch.

Figure 93 is a plan view of a single-use package with an oval shape and a peel open hinge-type cover.

Figure 93A is a perspective view of the single-use package of Figure 93 showing the hinge-type cover being opened.

Figure 94 is a plan view of a single-use package with an asymmetrical tear shape and two tear notches at the narrow end.

Figure 95 is a plan view of two of the single-use packages of Figure 94 packaged together.

Figure 96 is a plan view of a square shaped sachet-type single-use package with a tear notch.

Figure 97 is a plan view of a rounded corner square sachet-type single-use package with a tear-off end and cut out tabs that enhance visibility of the tear-off end.

Figure 98 is a plan view of an embodiment of a sachet-type single-use package, half being oval shaped and half being a rounded square shape with a half-moon tear-off end.

Figure 99 is a plan view of a sachet-type single-use package with a rounded square shape and a finger shaped tear-off end.

Figure 100 is a plan view of two sachet-type single-use packages of Figure 99 showing the finger shaped tear-off end of one fit into the finger shaped tear-off end of the other.

Figure 101 is a perspective view of a double curved-shape single-use package with the cover being peeled back to expose the lens therein.

Figure 102 is a perspective view of a plurality of the single-use packages of Figure 101 stacked together.

Figure 103 is a perspective view of a molded single-use package with a pull-top opening that has been peeled back to expose the inner space and contact lens therein.

Figure 104 is a perspective view of one embodiment of a pull-top single-use package with a handle detail.

Figure 105 is a perspective view of the single-use package of Figure 104 with the top pulled back and the base bent to expose the contact lens therein.

Figure 106 an exploded perspective view of a single-use package with a cover and base that lifts up.

Figure 107 is a perspective view of the single-use package of Figure 106 with the cover and base lifted up.

Figure 108 is a perspective view of a single-use package in which there is a pointed edge that breaks open the top cover.

Figure 109 is a perspective view of the single-use package of Figure 108 with the top cover broken open.

Figure 110 is a cross-sectional view of a single-use package with a polypropylene spring disc and a break-open edge.

Figure 111 is a perspective view of the cross-section of the single-use package of Figure 110 showing the break-open edge being broken.

Figure 112 is a perspective view of the polypropylene spring disc used in the embodiment of Figure 111 and contact lens thereon.

Figure 113 is a cross-sectional view of the single-use package of Figure 110 with a break-open edge that has been broken and has the foil cover peeled away, allowing the polypropylene disc and contact lens to re-equilibrate.

Figure 114 is a perspective view of a retort-type single-use package.

Figure 115 is a perspective view of the retort-type single-use package of Figure 114 with the contact lens exposed by peeling a layer.

Figure 116 is a plan view of a strip of retort-type single-use packages.

Figure 117 is a plan view of the strip of retort-type single-use packages of Figure 116 including a hydration medium pack.

Figure 118 is an exploded perspective view of an envelope, containing a plurality of retort-type single-use packages, packaged in a secondary package containing a large number of envelopes holding retort-type single-use packages strips.

Figure 119 is a plan view of a secondary packaging for a plurality of single-use packages in which there are six stacks of five single-use packages in separate compartments.

Figure 120 is a cross-sectional view of the secondary packaging of Figure 119.

Figure 121 is a perspective view of two of the secondary packages of Figure Figure119 stacked on top of each other, providing a 30 day supply of daily contact lenses for each eye.

Figure 122 is a perspective view of six of the secondary packages of Figure 119, providing a 90 day supply of daily contact lenses for each eye.

Figure 123 is a perspective view of twelve of the secondary packages of Figure 119, providing a 180 day supply of daily contact lenses for each eye.

Figure 124 is a plan view of a travel pack with two single-use packages.

Figure 125A is a plan view of secondary packaging in which there are three compartments each containing ten single-use packages.

Figure 125B is a cross-sectional view of the secondary packaging of Figure 125A.

Figure 126 is a plan view of a transparent travel package for a plurality of single-use packages.

Figure 127 is a front elevation view of the travel package of Figure 126.

Figure 128 is a side elevation view of the travel package of Figure 126.

Figure 129 is a plan view of the travel package of Figure 126 showing the inside of an open travel package holding a plurality of single-use packages, a sliding guide for the single-use package compartment and a mirror.

Figure 130 is a side elevation view of the open travel package of Figure 129 illustrating a means of hanging the travel package on a hook.

Figure 131 is a plan view of a travel package similar to that of Figure 126 but made of opaque material.

Figure 132 is a plan view of an alternative to the travel package of Figure 129 with a stationary guide for maintaining the single-use packages in compartments marked as "L" for left and "R" for right.

Figure 133 is a side elevation view of a package capable of holding enough single-use packages for 90 days of contact lens use for both right and left eyes, and a travel package attached to the 90 day package.

Figure 134 is a side elevation view of the 90 day package of Figure 133 without the travel package attached.

Figure 135 is a side elevation view of the side of the 90 day package of Figure 133 showing that the travel pack may be slid onto the cover of the 90 day package and then snapped into place.

Figure 136 is a side elevation view of the 90 day package with the travel pack of Figure 133 showing that the 90 day package may be used as a sunglass case when all of the single-use packages have been removed.

Figure 137 is a side elevation view of the 90 day package of Figure 134 showing that the insert containing the single-use packages may be lifted up and out of the package using the handle, once the cover to the 90 day package has been removed.

Figure 137A is an exploded perspective view of a rubber stopper that prevents the insert containing the single-use packages from slipping down into the 90 day package.

Figure 138 is a side elevation view of the back of a 90 day package showing that a tab and strip of single-use packages being lifted out of the 90 day package.

Figure 138A is a plan view of a tab that indicates there are only 30 contact lenses remaining in the 90 day package, as well as prescription and re-order information.

Figure 138B is a plan view of a tab that indicates there are only 10 lenses remaining in the 90 day package as well as prescription and re-order information.

Figure 139 is a perspective view of the single-use package secondary packaging container with a plurality of single-use packages therein.

Figure 140 is a plan view of the front of a single-use package holder sheet for a plurality of single-use packages wherein the single-use packages are arranged in a circular configuration.

Figure 141 is a plan view of the back of the holder sheet of Figure 140.

Figure 142 is a plan view of the front of a single-use package holder sheet for a plurality of single-use packages wherein the single-use packages are arranged in two parallel rows.

Figure 143 is a plan view of the back of the holder sheet of Figure 142.

Figure 144 is a plan view of a blister-type single-use package.

Figure 145 is a side elevation view of a stack of the blister-type single-use packages of Figure 144.

Figure 146 is a plan view of a secondary packaging container for a plurality of the blister-type single-use packages of Figure 144 arranged in a circular configuration.

Figure 147 is an exploded perspective view of the secondary packaging container of Figure 146 also showing a lid.

Figure 148 is a cross-sectional view of the secondary packaging container of Figure 147 in which there is a 30 day supply of contact lenses.

Figure 149 is a cross-sectional view of a secondary packaging container like that of Figure 147 in which there is a 90 day supply of contact lenses.

Figure 150 is a plan view of a single-use package of the present invention with a rounded asymmetrical triangle shape.

Figure 151 is a plan view of a combination of six of the single-use packages of Figure 150 in a circular arrangement.

Figure 152 is plan view of a donut-shaped single-use package holder sheet.

Figure 153 is an exploded perspective view of a plurality of the holder sheets of Figure 152 being placed into a round box.

Figure 154 is a perspective view of a stand for containing a plurality of the boxes of Figure 153.

Figure 155 is a perspective view of a secondary package having an eye-mask shape and containing a plurality of round single-use packages of the present invention.

Figure 156 is a plan view of two single-use packages clipped onto a sheet for easy transport.

Figure 157 is a plan view of another single-use package with a rounded triangle shape.

Figure 158 is a plan view in which a circular secondary packaging container holds a 30 day supply of oval shaped single-use packages arranged in a circular configuration.

Figure 159 is a plan view in which a rectangular secondary packaging container holds a 30 day supply of single-use packages arranged in two parallel rows.

Figure 160 is a perspective view of a secondary box for delivery of a plurality of single-use packages.

Figure 161 is a perspective view of a stand for a 90 day supply of round single-use packages.

Figure 162 is a perspective view of a delivery package comprising an aluminum-coated envelope with a plurality of single-use packages therein.

Figure 163 is a perspective view of a single-use package dispensing case.

Figure 164 is a perspective view of the single-use package dispensing case of Figure 163 with one end opened and a single-use package removed.

Figure 165 is a side elevational view of a storage container and a plurality of single-use contact lens packages stacked therein.

Figure 166 is a plan view of another single-use package with a rounded rectangular shape.

Figure 167 is a plan view of the single-use package of Figure 166 showing the seal areas within the package.

Figure 168 is a plan view of the single-use package of Figure 166 showing a spring disc in place, but the top sheet of the package removed.

Figure 169 is a perspective view of the single-use package of Figure 166 showing the package starting to be opened.

Figure 170 is a perspective view of the single-use package of Figure 166 showing the package fully opened.

Figure 171 is across-sectional view of the laminate used to make the single-use package of Figure 166, taken along line 171-171 of Figure 170.

Figure 172 is a graph showing typical traces of opening forces for a prior art blister package and an exemplary single use package like that shown in Figure 166.

### DETAILED DESCRIPTION OF THE DRAWINGS AND PREFERRED EMBODIMENTS OF THE INVENTION

The present invention will now be described with reference to the accompanying illustrations. In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

These are also described and illustrated examples of packaging as background to the invention as claimed.

The term "internal depth" means the depth of a contact lens holding area within the contact lens package determined by subtracting the height of the combined opposing wall layers making up the contact lens holding area of the package from the total height of the contact lens holding area of the package when the package is lying on a flat surface.

The term "sagittal depth" means the total height of a contact lens resting in a relaxed state on a flat surface.

Referring to a contact lens in its "equilibrated state" means that the contact lens is in a resting state unrestricted by any external forces affecting its shape or height.

Throughout the specification the term homogenous refers to a package wall formed from a single layer (i.e. non-laminated layer) of the same material. Many of the packages described as being made from a homogenous single layer material may also be made from a multi-layer, laminated, material which may be formed from a combination of suitable plastics or a combination of suitable plastics and a metallic layer as described herein.

Referring to Figures 1 and 2, there is shown a typical prior art disposable blister contact lens package 1 which is formed in two parts. The package 1 comprises a blister pack member 2 which is sealed by a membrane 3 forming a lid on the package 1 and which may be peeled away to release a contact lens 4 therein. In Figure 3, the package of Figure 2 is shown with the membrane 3 peeled away to expose the contact lens 4. Typically, the member 2 will be a preformed blister pack and include a profiled recess 5 which provides a recess in which a lens may be placed. The member 2 is typically injection molded and the package is completed with a sealing membrane 3 which mates with a flange 6 to create a sterile seal. The contact lens 4 is immersed in a solution 7 which keeps the lens hydrated until it is removed from the pack. The injection molded preform makes this an expensive package to manufacture, with the result that the contact lens will inevitably be more expensive for the consumer.

Figure 4 shows a stacking arrangement for two identical prior art contact lens packages 10 and 11. It can be seen from Figure 4 that although two packs conveniently inter-fit, they take up a thickness greater than the thickness (or depth) of two packs. Ideally, a lens package should take up as little space as possible considering the relatively small size of a contact lens. Economy of storage space is a critical issue where lenses are mass produced. The existing blister packs take up a disproportionate amount of space relative to the size of the lens, leading to increased handling and storage costs. Figure 5 shows a plurality of like blister packs 12 stacked as in Figure 4 and retained in a carton 13. This bulky, inconvenient, and materials-intensive form of lens packaging exists as a result of conventional wisdom which suggests that lenses can only be stacked in rigid containers which isolate the lens from external load.

As noted above, preferred embodiments of the invention provide a single-use package with a contact lens therein, and the package has an internal depth which is less than an overall sagittal depth of the contact lens when the contact lens is in its equilibrated form Several embodiments use two flat sheets of material sealed together, or sealed with a support member between them, and clearly display the feature that the internal depth of the package is less than the sagittal depth of the contact lens.

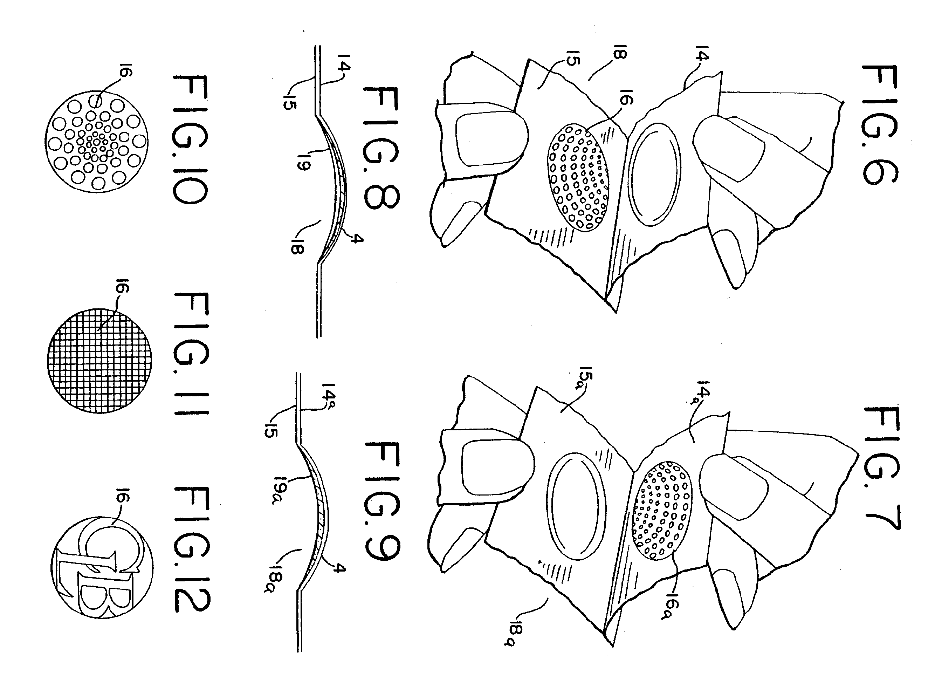

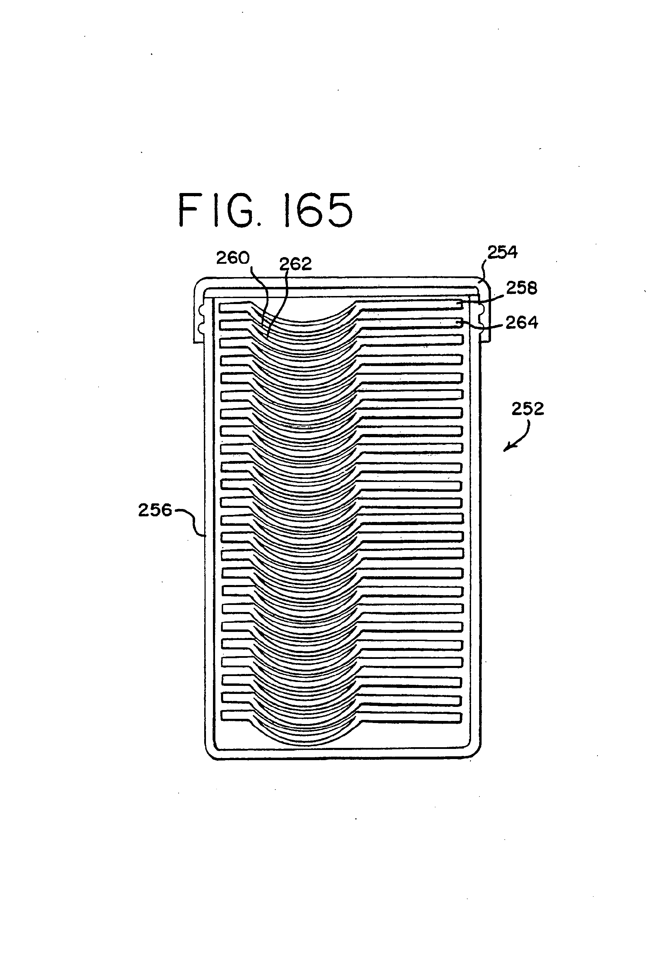

In some embodiments shown in Figures 6-9, the single-use contact lens packages 18 may be stacked such that they interfit with one another like stacked spoons. That is, the convex surface of a first package rests upon the concave surface of a second package when stacked on top of each other. The single-use packages 18 of this embodiment have first and second sheets 14, 15, both of which are indented. Therefore, when the single-use package 18 is sealed, there is a concave surface and a convex surface and the contact lens is held between these surfaces. Either of the top or bottom surfaces of the single use package may be convex or concave; however, in a preferred embodiment, the top surface of the package is concave and the bottom side of the package surface is convex. This type of single-use contact lens package 18 stacking is referred to herein as "spooning" and is economical in terms of space as well as the amount of secondary packaging required. Additional embodiments of the single-use packages that may be stacked in this manner are shown in Figure 165. Single-use packages of this type may hold the contact lenses in a somewhat flattened state, in an equilibrated state, or anywhere along the continuum there between. However, a common feature of the single-use packages of this embodiment is that they all have an internal depth that is between 0.1 and 3.0 mm, more preferably between 0.2 and 1.5 mm, and most preferably between 0.2 and 0.5 mm. In this instance it is clear that the definition of internal depth of a contact lens package will obviously be construed to mean the depth of a contact lens holding area within the contact lens package, defined by the distance between the opposing wall layers making up the contact lens holding area of the package. The distance is usually measured at the center of the contact lens holding area. When the package has a concavity and an opposite face that is also concave in the same direction (see Figs 6-9 and 165 for example), the "internal depth" will obviously be the distance between the walls of the contact lens package on a line that is normal to the center of the lens when the lens is in its normal rest position within the package. The internal depth may be determined by drawing a line through the center of the lens within the contact lens package that is perpendicular to the face of the lens at its center point, and then measuring the distance along that line where the package walls intersect the drawn line. The distance measured is the internal depth of the contact lens package.

In one embodiment of the single-use package of the present invention, shown in Figures 6 and 8, the single-use package 18, has an internal depth of between 0.2 and 0.5 mm and comprises a first sheet 14 and a second sheet 15 of material sealed together. In this embodiment, one of the two sheets 15 is embossed 16 and also has a convex indentation 19. The embossing 16 aids the release of the lens 4 as it prevents the lens 4 from adhering to the embossed sheet 15, as shown in Figure 8. Therefore, it is possible to have the contact lens 4 present in a predictable orientation upon opening of the single-use package 18. As shown in the alternate embodiment 18a of Figures 7 and 9, the embossed surface 16a may alternatively be on the top sheet 14a, which in this example, also has a concave indentation 19a, while bottom sheet 15a has a convex shape. As shown in Figure 9, there is a contact lens package having an internal depth that is between about 0.2 mm and about 0.5 mm. The contact lens in this example adheres to the bottom, non-embossed sheet.

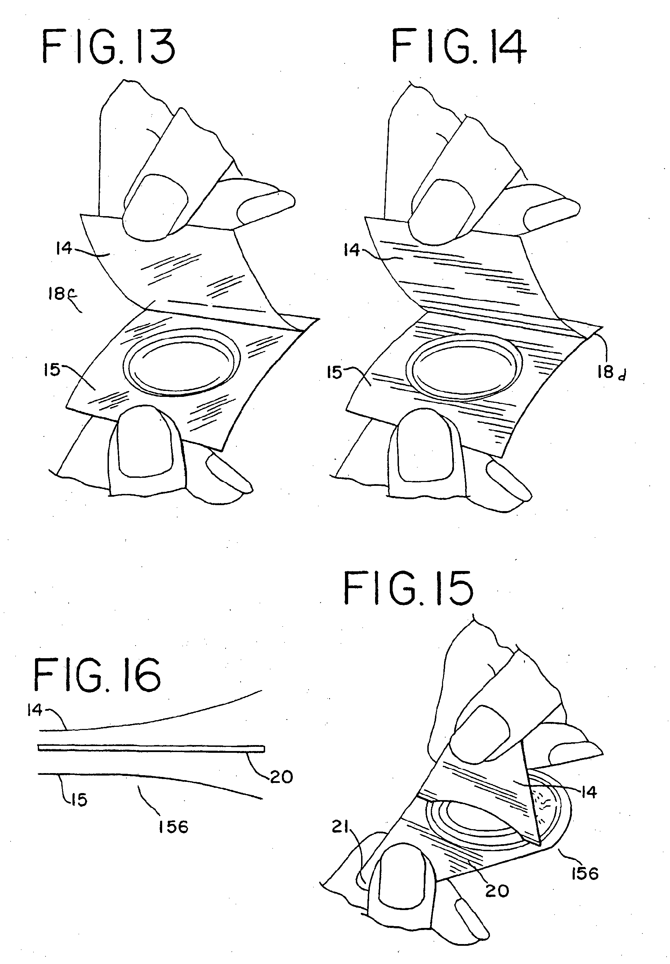

The embossing 16 may take numerous forms, for example, abstract patterns, grids and logos, as shown in Figures 10-12. Alternatively, Figures 13 and 14 show embodiments in which the single-use packages 18c and 18d have no embossing. The sheets 14 and 15 may be opaque, transparent or colored, such as white or light green. If the sheets are colored, one preferred embodiment is to have the color displayed inwardly toward a contact lens so that the lens may be easily visualized. In addition, the sheets 14 and 15 may have printing thereon. Such printing may include, for example, symbols (such as text, diagrams, drawings), prescription, instructions, and manufacture information. This printing may be on the outside of the package, or more preferably, displayed inwardly toward the contact lens (when the package is sealed), which will aid visualization of the contact lens.

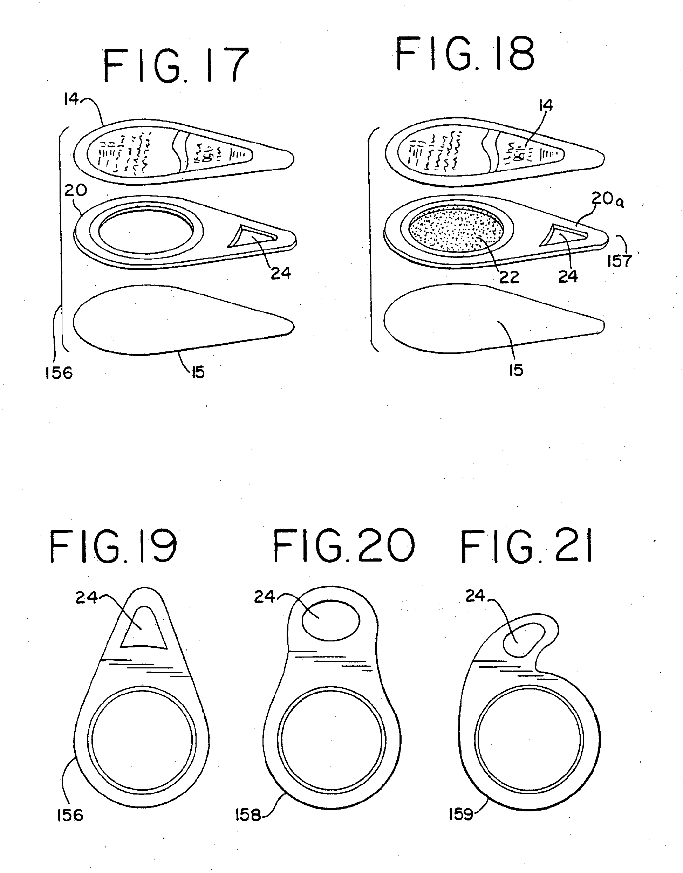

As shown in Figures 15-17 and 19, the single-use package 156 includes a support member 20. The support member 20 encircles the contact lens 4 within the single-use package 156. The support member 20 may be flexible or rigid and may be, for example, composed of any suitable polymers such as polypropylene (PP), polypropylene copolymer (PPCO), polymethylpentene (TPX), polycarbonate (PC), polysulphone (PSF), polyethylene naphthalate (PEN), cyclic olefin copolymer (COC), or fluorinated ethylene propylene (FEP), or other similar material. The support member 20 does not change the flat profile of the single-use package 156. Further, the thickness of the support member 20 is such that the single-use package 156, when sealed, still has a depth that is less than the natural sagittal depth of the contact lens 4. The support member 20 may also serve as a handle 21 (Figure 15) to assist in moving or opening the single-use package 156. The handle area 21 may optionally have a cut out 24 that further assists gripping the single-use package 18 as shown in Figure 17.

As illustrated in Figure 18, the support member 20a has mesh-like netting 22. The netting 22 serves as an additional support for the contact lens 4 as the lens rests upon the netting 22 when in the single-use package 157. The netting 22 may be composed of any suitable polymeric material such as: polypropylene (PP), polypropylene copolymer (PPCO), polymethylpentene (TPX), polycarbonate (PC), polysulphone (PSF), polyethylene naphthalate (PEN), cyclic olefin copolymer (COC), or fluorinated ethylene propylene (FEP), or other similar material.

The single-use package, with or without the support member 20, may have a variety of shapes. For example, the single-use package may be a square, rectangle, oval, round, tear drop shaped, figure eight, triangle, and combinations thereof, all of which may be symmetrical, asymmetrical, straight edged or rounded. Two additional shapes of contact lens packages 158 and 159 are shown in Figures 20 and 21. Additional shapes are acceptable as long as they may accommodate a soft contact lens.

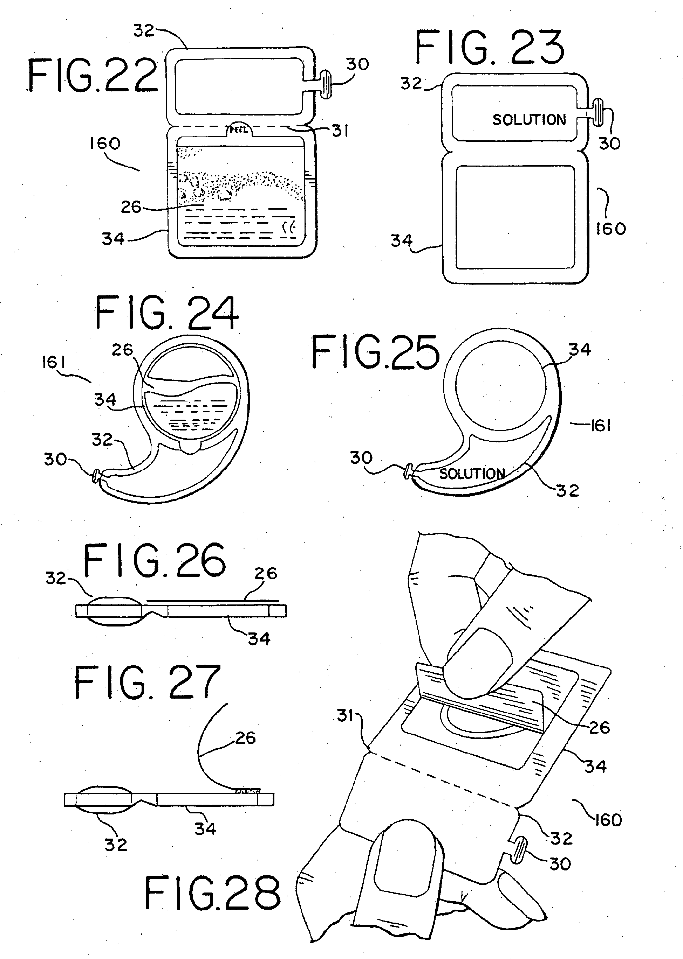

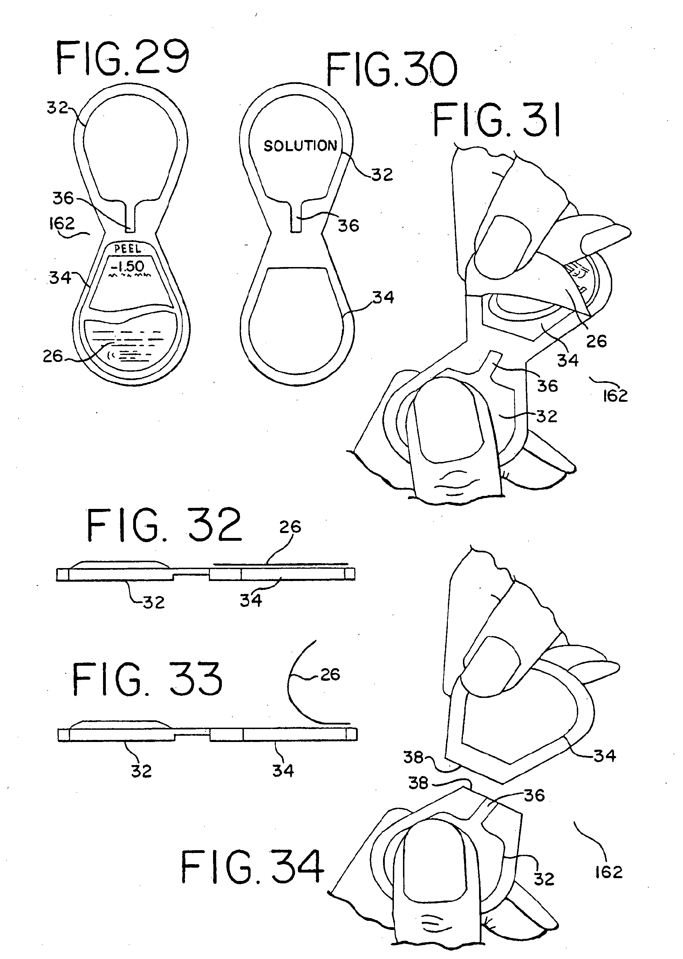

As shown in Figures 22-45, the single-use package may have a first space 34 for a contact lens and a second space 32 for hydration medium 32. This arrangement may take on a variety of configurations, some of which allow the second space for hydration medium to be flat, bulbous and optionally to serve as a handle. Figures 22 and 28 illustrate that the second space 32 for hydration medium may be attached to the first space 34 for the contact lens and the two spaces are separated by a seamed connection 31 between the two sheets comprising the single-use package 160. The connection 31 may be flexible and frangible and thus the second space 32 may snap off as in Figure 34, or be torn away from the first space 34 as in Figures 22, 28, 35 and 36. The second space 32 for the hydration medium may have a cap 30. The cap 30 may be removed by pulling, twisting, or snapping off. Alternately, the second space 32 may remain connected to the first space 34 as shown in the single use package 161 of Figures 24-25. The first space 34 and second space 32 may be opened at the same time or different times. In one example, the first space 34 for the contact lens is opened prior to the second space for the hydration medium 32. In an alternative example, the second space 32 for the hydration medium may be opened prior to the first space 34 for the contact lens. The first and second space may be opened by the same or different means. The first and second space 34, 32 may both be opened by peeling away a foil 26 (Figure 28) or other covering, or alternatively, the first space 34 may be opened by peeling away the cover 26 and the second space 32 may be opened by removing a cap 30. Figures 26-27 shows a first space 34 being opened by peeling away a foil 26 or other covering, while the second space 32 remains attached and unopened.

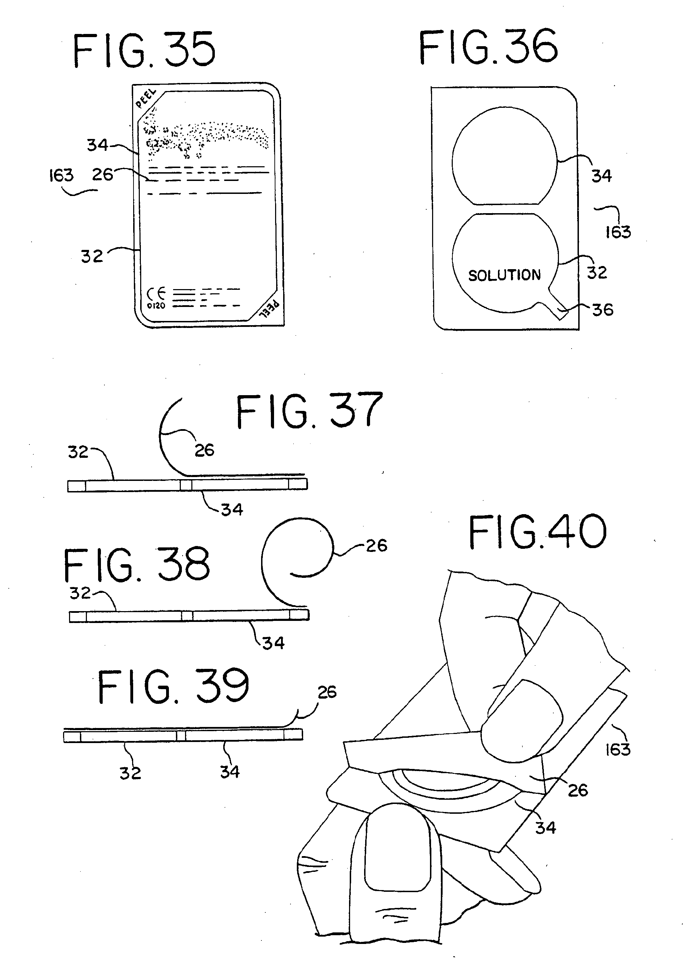

The cover may be heat sealed to a base, a support member or to one of the sheets comprising the single-use package. The heat sealing may be around the entire perimeter or alternatively, solely around the first space containing the contact lens. The first and second spaces 34, 32 may be separated before or after one or both of them are opened. The second space 32 for hydration medium may be opened by separating the second space 32 from the first space 34, thus exposing an opening or channel 36 from which the hydration medium may escape, as shown in the embodiment of the single-use package 162 of Figures 29-34. Both the first and second space may be opened by peeling a cover 26 the single-use package 163 as shown in Figure 40. Figures 37-39 show the two spaces 32 and 34 may be opened by lifting a cover 26 from either end, and may be opened at the same time or only one space may be opened while the other remains sealed.

The hydration medium may be any solution suitable for use with contact lenses. For example, the hydration medium may be re-wetting solution, cleansing solution or any other maintenance solution. An example of a suitable hydration medium is saline solution.

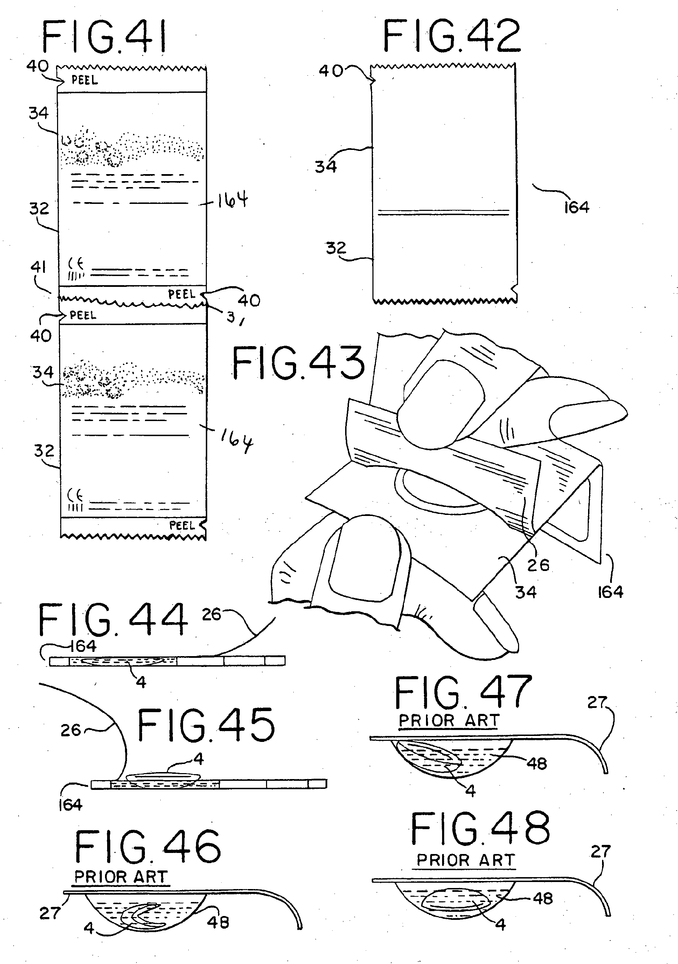

In other embodiments, as shown in Figures 41 and 116-117, one single-use package 164 and 182 may be connected to another identical single-use package 164 and 182. The connected single-use packages may form strips of single-use packages 41. The number of single-use packages 164 connected may be between 1 and 90, or alternatively, between 90 and 180 packages. The strips of single-use packages 41 may be rolled up or folded in zigzag fashion. The single-use packages 164 and 182, connected to form strips 41, may have only a first space 34 for a contact lens or alternatively may also have a second space for hydration medium 32. The connection 31 or 76 between the single-use packages is flexible and frangible. Also shown, in the embodiment of Figure 41, is a tear notch 40 to assist in opening the single use package 164.

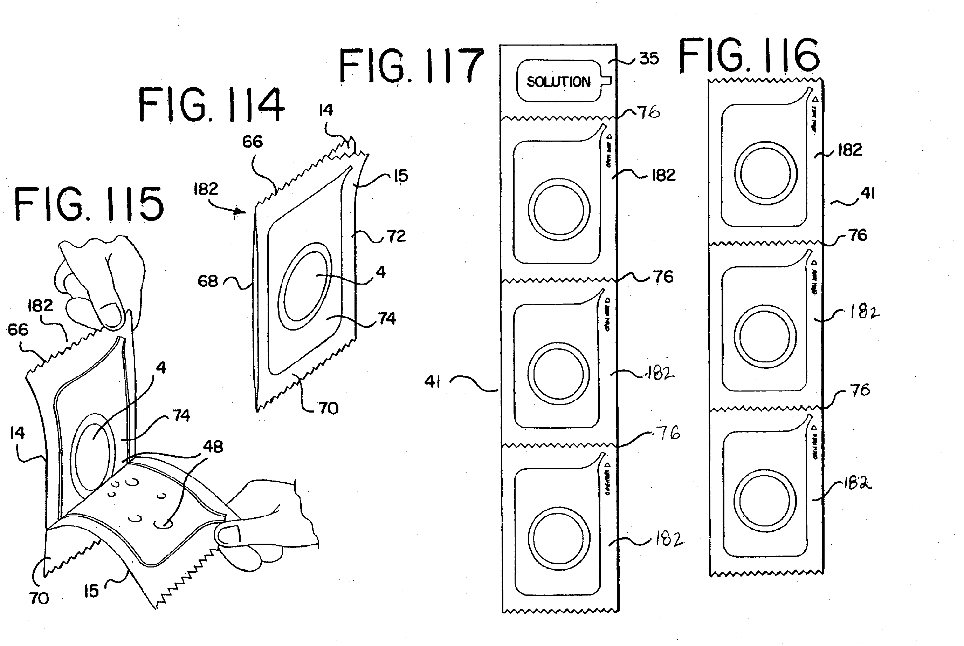

The strip of single-use packages 41, or alternatively, a plurality of individual single-use packages, may be used in a pop-up dispenser. In this embodiment, a plurality of single-use packages 164 and 182 are connected to one another via frangible connections 31, 76 (Figures 116-117) and are dispensed one at a time such that as one single-use package 164 is removed, another is available in a dispensing region of the dispenser. Alternatively, a plurality of individual single-use packages are contained in a dispenser in such a way that as one single-use package 164 is removed, it engages a second similar single-use package 164, thus making the second package 164 available for subsequent removal.

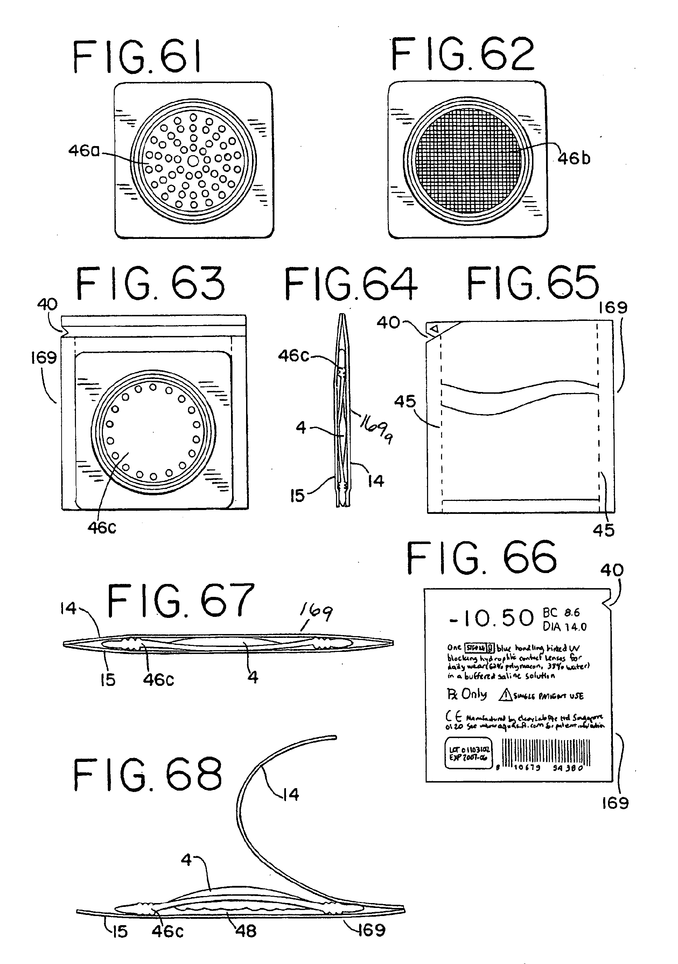

The single-use package maintains the contact lens 4 therein in a flattened state and restricts the movement of the contact lens 4 while the package is sealed, examples of which are shown in Figures 44 and 67. In Figure 44, the single-use package 164 prevents the problematic movement of the contact lens 4 that occurs in the typical prior art blister pack 27. As illustrated in Figures 46-48, a contact lens 4 in a prior art blister pack 27 is able to invert, shift positions, stick to the side, and fold in half. However, the single-use package, of some embodiments of the present invention, maintains the contact lens 4 in the same position as when it is first placed within the package and sealed. In addition, the contact lens 4 may be presented in a predictable orientation when the single-use package is opened. This reduces the need to handle the lens prior to insertion thus reducing the risk of lens damage or contamination of both the lens and the eye of the wearer. This also facilitates placement of the contact lens in the eye of the wearer. Typically, the wearer's vision will be somewhat compromised prior to insertion of the contact lens. Therefore, it is useful to know, without being able to see, what orientation the contact lens is in when the package is opened.

Even though a defining characteristic of a preferred embodiment of single-use packages of the present invention is that they maintains the contact lens 4 therein in a flattened state, the single-use package itself need not necessarily be flat. The single-use package may take on a variety of shapes, although preferably, the single-use package will have a slim profile and be able to be stacked and packaged compactly.

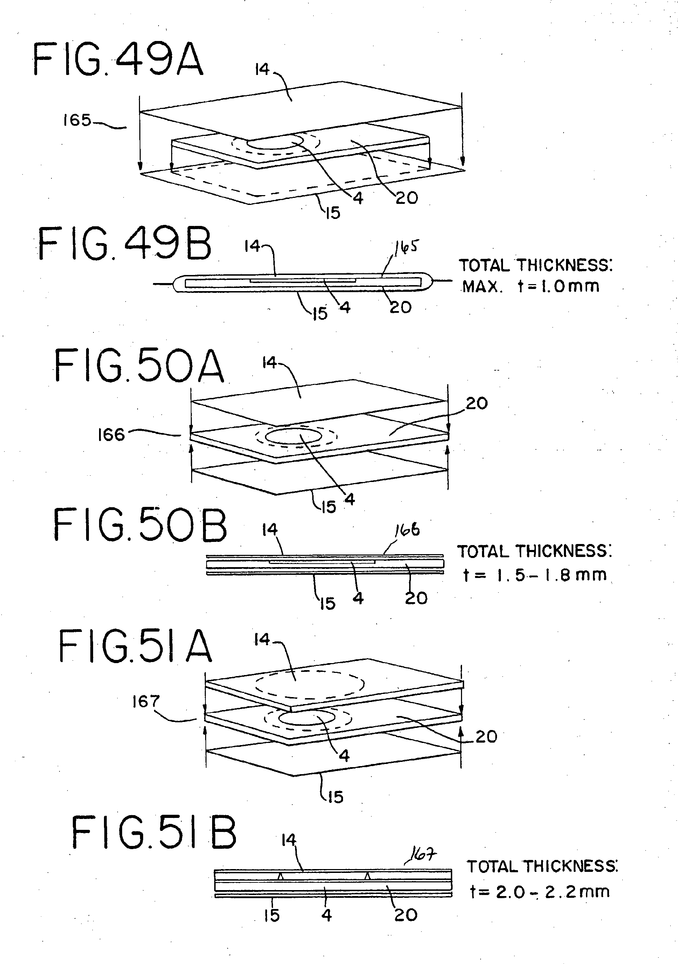

As shown in Figures 49A-51B, there are a variety of constructions and configurations useful for producing a single-use package. In Figures 49A and B, a sachet type single-use package 165 is composed of three layers. The two outer layers 14, 15 are usually aluminum foil and the inner layer is polypropylene or any other suitable polymer. The typical thickness of this type of single-use package 165 is approximately 1.0 mm; however, it can be less depending upon the choice of materials and design. Aluminum foil and polypropylene (or any other suitable material) may also be used in a non-sachet type single-use package 166, as shown in Figures 50A and B, with an approximate total thickness of 1.0-2.0 mm, preferable 1.0-1.8 mm. The foil may serve as both a cover and a base for the package. An all-polypropylene single-use package 167 may also be produced, as in Figures 51A and B, with an approximate total thickness of 2.0-3.0 mm, preferably 2.0-2.2 mm. These constructions may be used to produce single-use packages with or without spring discs 46 (Figures 61-69), support members 20, and may be any shape or color. For instance, other suitable polymers may be used in lieu of, or in combination with, polypropylene.

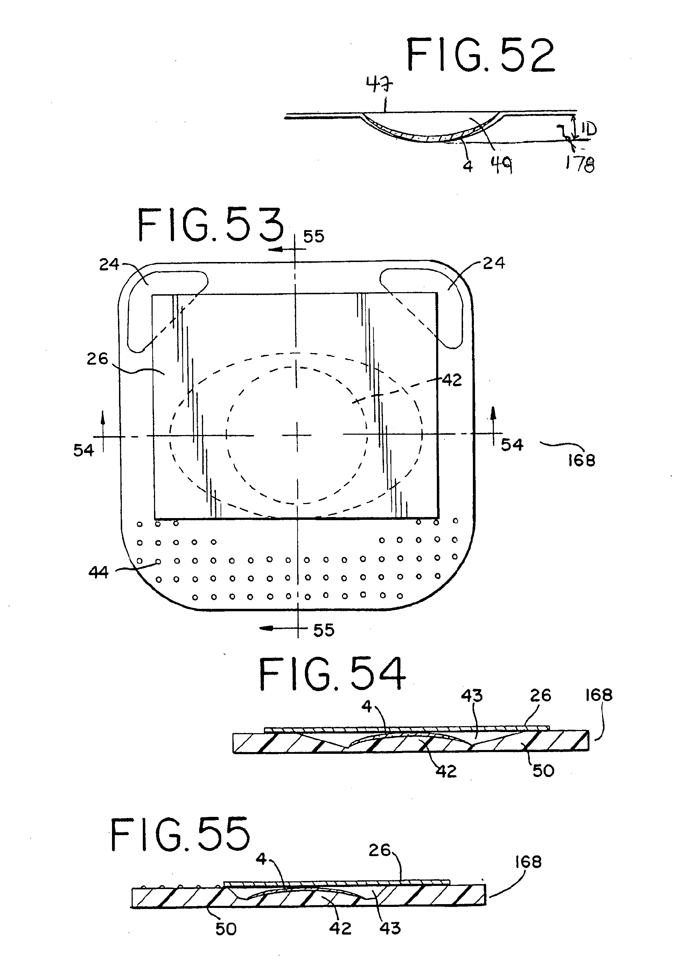

Figure 52 shows a single-use package 178 in which the internal depth ("ID") of the single-use package is shown. The internal depth in this package is determined by measuring the height of the package and subtracting the thickness of the cover material 47 and the thickness of the material making up base 49. In other packages, there may be parts of the package which are not used to hold the contact lens. These parts of the package are disregarded when determining the internal depth of the contact lens holding area. The internal depth of some embodiments of the single-use package of the present invention is approximately 0.1 mm to 3.5 mm, more preferably, 0.1 mm to 3.0 mm. Regardless of the dimensions, the internal depth is always less than the natural sagittal depth of the contact lens in its equilibrated state. In an equilibrated state, the natural sagittal depth of a contact lens is typically greater than 3.8 mm, and often as high as 5.0 mm.

As shown in Figures 53-55, in one embodiment of the single-use package 168, there is an island-like protuberance 42, upon which the contact lens 4 rests, in the recess 43 in base 50. The contact lens 4 is maintained in a flattened state and is immobilized upon the protuberance 42 by the cover 26 of the single-use package. In addition, there may be a textured surface on at least one side of the single-use package. For example, the texture may be raised bumps, or ridges and may be on one or both sides of the single-use package or on a handle. In this embodiment, there are raised features 44 on one end of the single-use package to allow the user to easily grip the single-use package 168 as well as cut outs 24 on the corners of the base to facilitate removal of the cover sheet 26.

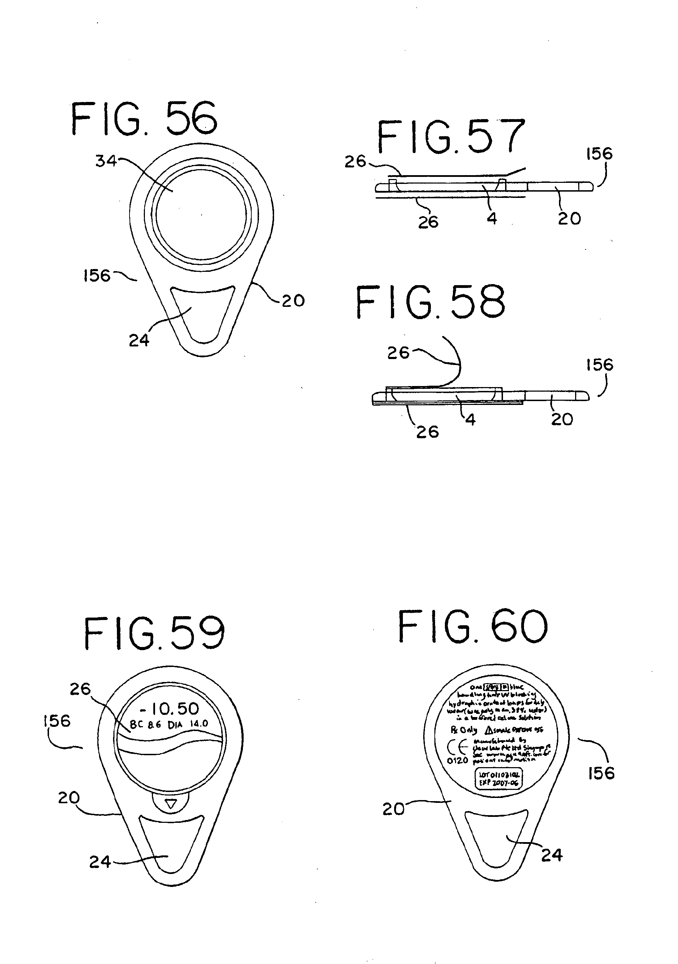

The single-use package 156 may be a tear shape with a cut out 24 in the support member 20 to facilitate handling of the single-use package 156. Figures 56-60 show the tear shaped single-use package 156 with and without the cover 26 in both opaque and transparent varieties. The side view illustrates that the contact lens 4 therein is maintained in a flattened state until the cover 26 of the single-use package 156 is removed.

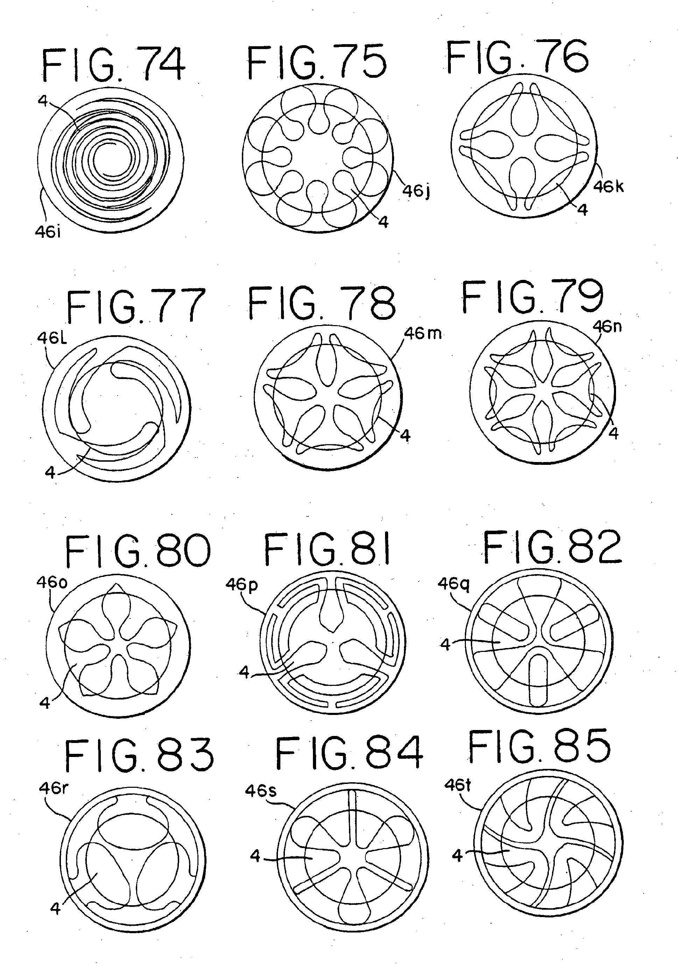

As shown in Figures 63 and 65-68, a polypropylene spring disc 46c may be added to a single-use package 169 while the single-use package 169 is sealed, and then assist the contact lens 4 in returning to its equilibrated state when the single-use package 169 is opened. As shown in Figures 61-62, and 69-86, numerous embodiments of the spring disc 46a-t are contemplated. A unifying characteristic of all of the spring discs 46a-t is that in their equilibrated state, the spring discs 46a-t are not flat. However they are compressible and are able to be maintained in a flattened state within the sealed single-use package 169, as shown in Figures 63 and 65-68. Although other variations are possible, two different ways of sealing the single-use package are shown in Figures 64 and 68. In Figure 64, the two sheets 14, 15 of material are sealed together on one end and are sealed to the spring disc therein on the other end to form package 169a. Alternatively, in Figure 68, the two sheets 14, 15 of material forming the single-use package are sealed together on both ends. Tear notch 40 and reliefs 45 may be provided, as shown in Figure 65.

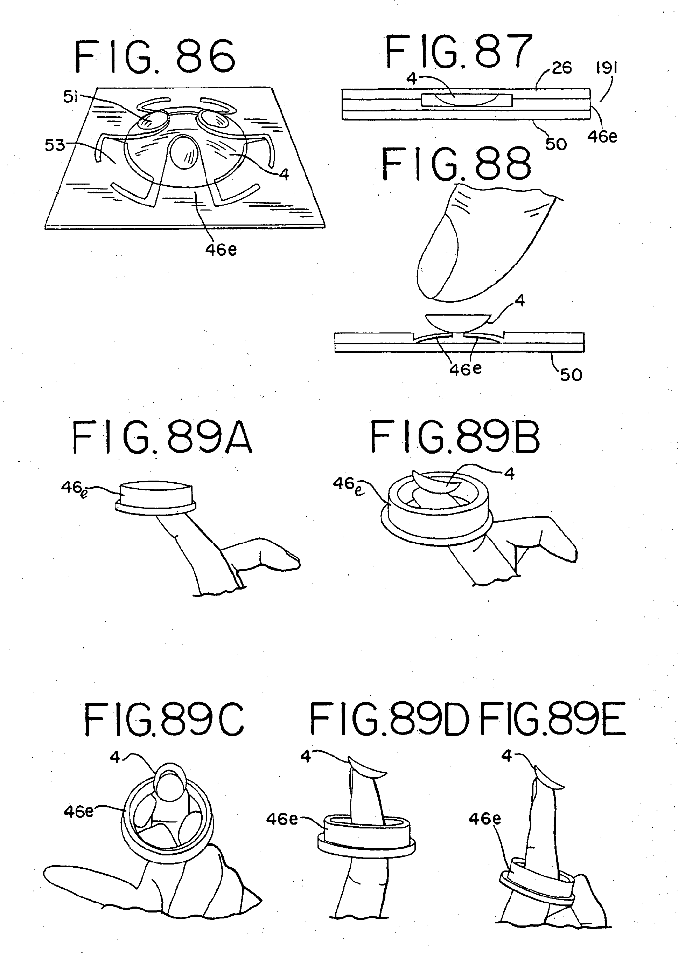

Figure 68 illustrates that in its relaxed state, the spring disc 46c is arched. However, when placed between the two sheets 14, 15 of the single-use package and sealed, the spring disc 46c, and hence the contact lens 4 thereon, is flattened (see Figures 67). When the single-use package 169 is opened, the spring disc 46c pops up to its arched state and the contact lens 4 is presented in a 'ready to insert' orientation, that is, the lens 4 may be pinched off, between the thumb and forefinger, and inserted into the eye of the wearer (see Figure 68). A perspective view of a contact lens 4 resting on a spring disc 46e is provided in Figure 86. As shown, in an equilibrated state, the spring disc 46e has projections 51 that extend upward toward the contact lens 4 and it is the projections 51 that provide support for the central portion contact lens 4 as it rests thereon. The peripheral portion of the contact lens rests around the base 53 of the spring disc 46e.

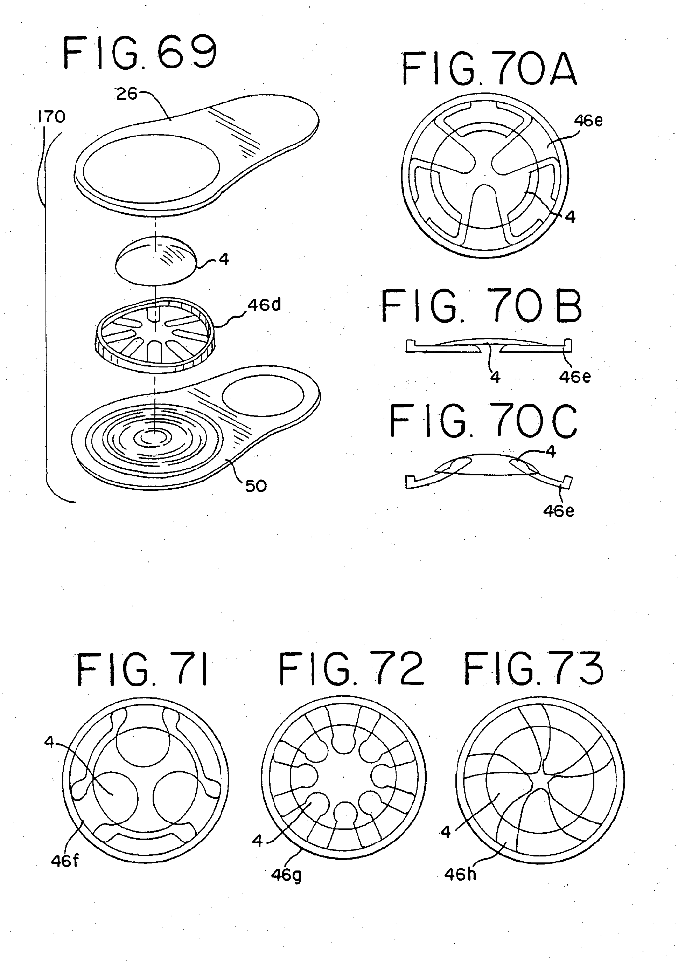

Figure 69 illustrates the assembly of a single-use package 170 that includes a spring disc 46d. The spring disc 46d is placed on a molded polypropylene sheet which forms a base 50 of the single-use package 170. The contact lens 4 rests with its concave side upon the spring disc 46d and the single-use package 170 is sealed with an aluminum foil cover 26.

Preferably, the concave side of the contact lens 4 rests upon the spring disc 46d. However, as shown in Figures 87-88, the convex side of the contact lens 4 may rest upon the spring disc 46e. In this case, the sealed single-use package 191 holds the lens 4 and spring disc 46e in a flattened state and when opened, both return to their equilibrated form.

As presented in Figures 89A-E, a method of insertion made possible by using a spring disc 46e is illustrated. A semi-soft polypropylene spring disc 46e is used to position the contact lens 4 in an orientation that is ready for insertion into the eye of a wearer. As shown, the spring disc 46e is placed upon the tip of an index finger. The finger is then pushed through the center of the spring disc 46e such that it makes contact with the convex side of the contact lens 4. The finger continues to proceed through the center of the spring disc 46e until the spring disc 46e drops to the base of the finger and the contact lens 4 rests on the tip of the index finger. The contact lens 4 is then in a position to be easily inserted into the eye of the wearer. Thus, the contact lens 4 is inserted with a minimum of handling, reducing the risk of contamination to the contact lens 4 and the eye.

A method of making a single-use contact lens package may be provided in which a spring disc is placed on top of a contact lens. The spring disc and contact lens are then dosed with a minimum amount of hydration medium and subsequently one sheet of material is placed above and one sheet of material is placed below the spring disc and contact lens. The sheets of material are then sealed. In an alternative method, the spring disc and contact lens are inverted prior to dosing with the hydration medium such that the hydration medium contacts the lens prior to the spring disc. When the sealed single-use package is opened, the spring disc pops up as does the contact lens thereon. The equilibrated contact lens, however, will be above the level of the equilibrated spring disc.

The single-use package of the present invention may include a hermetic seal, typically toward the perimeter of the package. If the package is indented, such as in Figures 6 and 7, the pliability of the two sheets may differ, and the strength of this seal may be made to vary around the perimeter, so as to make the package open in a manner that makes the lens the most easily removed as possible. In addition, packages that include a spring disc may include internal seals so that the package will open in a predetermined fashion, thus always presenting the contact lens in a consistent orientation. For example, the single use package 169 of Figure 68 will have a seal around the perimeter. In addition, the edges of the disc 46c will preferably be adhered to the second sheet 15 with a seal that is more secure than a seal between the edges of the disc 46c and the first sheet 14. Then as the sheets 14 and 15 are grasped and pulled apart, the hermetic perimeter seal will first be opened, and then the first sheet 14 will come off of the disc 46c, leaving the disc 46c adhered to the second sheet 15. The center of the spring portion of the disc will then always pop-up with the lens 4 on top of it as the package is opened. (Of course this presumed that the orientation of the lens and the spring direction of the disc are consistent from one package to the next when the package is assembled.) The shape of the hermetic seal may include a point directed toward the part of the package where the user will first spread the first and second sheets apart, so that the line of action of opening the sheets will encounter this point first, and all of the opening force will be directed to opening the hermetic seal at this point. The composition of the inside layers of the sheets and the disc will preferably be chosen so that they can be welded together with heat seals as is commonly known. The disc may be formed with an uneven surface to affect the way the seal is formed and the strength thereof, and then be oriented within the package so that the first sheet 14 will more readily separate from the side of the disc toward the part of the package that will open first, and be more tightly bonded to the sheet 14 on the back part of the disc. This will make it easy to open the package to a good stopping point where the lens is exposed for removal from the package.

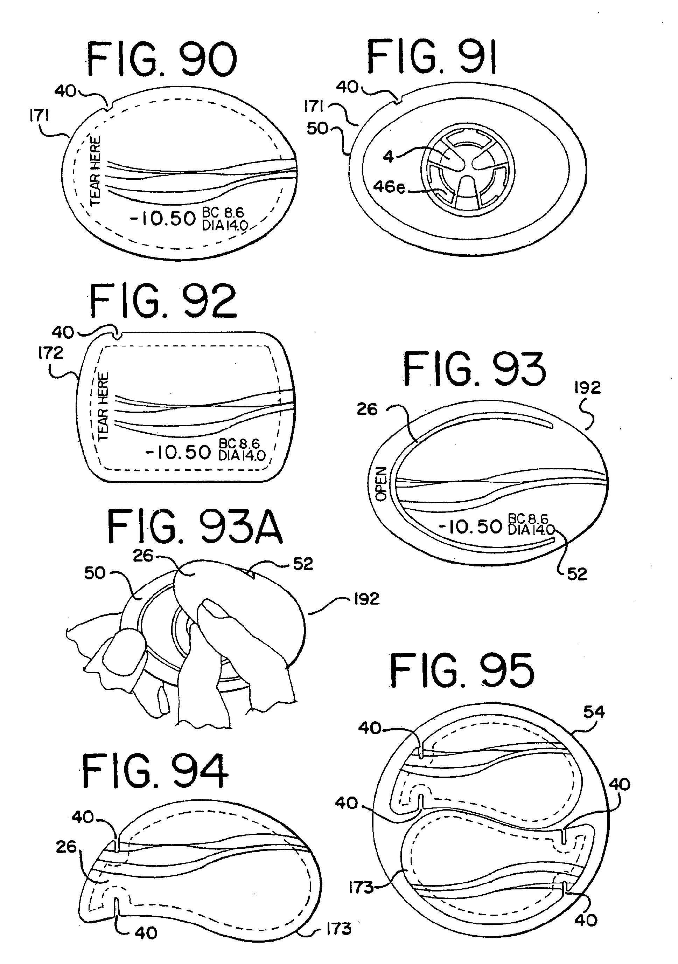

Single-use packages, with and without spring discs, may take a variety of shapes. Figure 90 shows an oval shaped single-use package 171 with a notch 40 to aid the user in tearing the end of the cover 26 from the single-use package 171 to release the contact lens 4 therein. Figure 91 is the single-use package 171 of Figure 90 with the cover 26 removed, thus allowing the spring disc 46e and contact lens 4 to be visualized. A rounded rectangle variation with a tear notch 40 is seen in Figure 92.

An oval single-use package 192 with a hinge-type cover 26 is shown in Figures 93 and 93A. The cover 26 is sealed around the periphery such that it may be peeled back but not completely removed. Instead it is peeled back far enough to expose the contact lens 4 and remains connected to the single-use package 192 at a hinged area 52. Thus, once the seal is broken, the cover 26 swings back like a door to allow access to the contents of the single-use package 192.

An asymmetrical teardrop shaped single-use package 173 is seen in Figures 94-95. There are two tear notches 40 that allow the user to tear open the single-use package, at the narrow end, to expose the contact lens 4 therein. This shape allows two single-use packages 173 to be inter-fit and stored compactly, on a disc 54, making it an ideal option for traveling consumer.

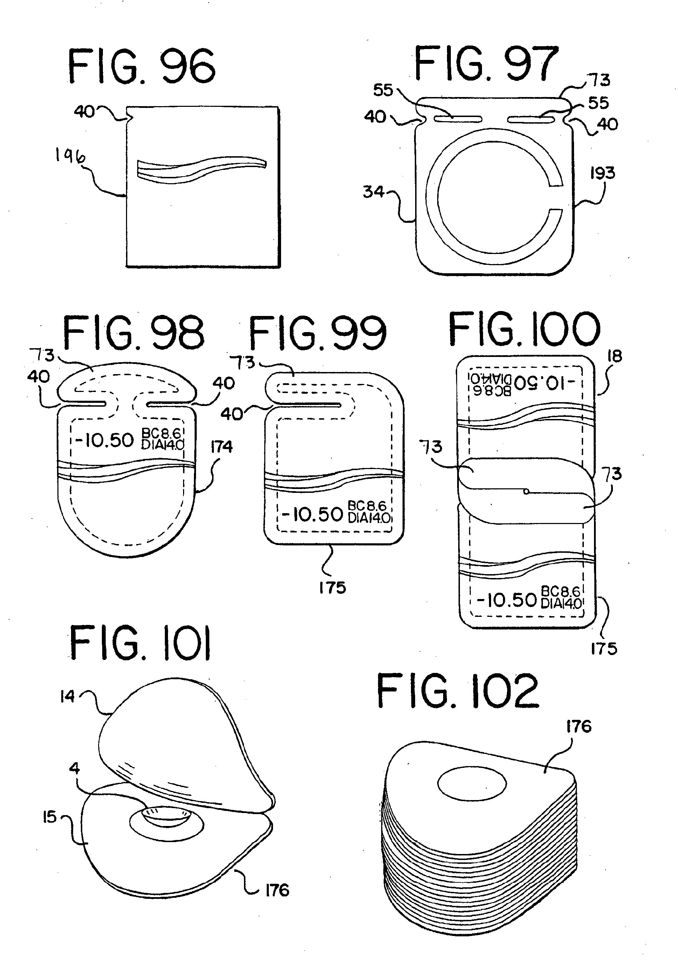

Several sachet type single-use packages are seen in Figures 96-100. In Figure 96, a typical square shaped single-use package 196 with a tear notch 40 is seen. A rounded square with an enhanced tear-tab 73 is shown in Figure 97 in which the tear-tab 73 is made more visible by two central areas 55 where foil has been cut away between the tear-tab 73 and the body of the single-use package 193. A variation is seen in Figure 98 where there are notches 40 extending from the peripheral edge to the center to enhance the visibility of the tear-tab 73.

Figure 99 shows a rounded square shaped single-use package 175 with a finger-like tear tab 73 on one end. This tear tab 73 serves as a means of tearing open the single-use package 175 as well as a means of connecting two like single-use packages 175 as seen in Figure 100. The fmger-like tear tabs 73 of two single-use packages inter-fit and therefore hold the two single-use packages 175 together.

In Figure 101, a double-curve shaped single-use package 176 is provided. In this, a top sheet 14, such as aluminum foil, may be welded to a bottom polypropylene sheet 15 without wrinkling. The top sheet 14 may be pulled back to expose the contact lens 4 therein. The double-curve shape allows a plurality of single-use packages 176 to be stacked compactly as shown in Figure 102.

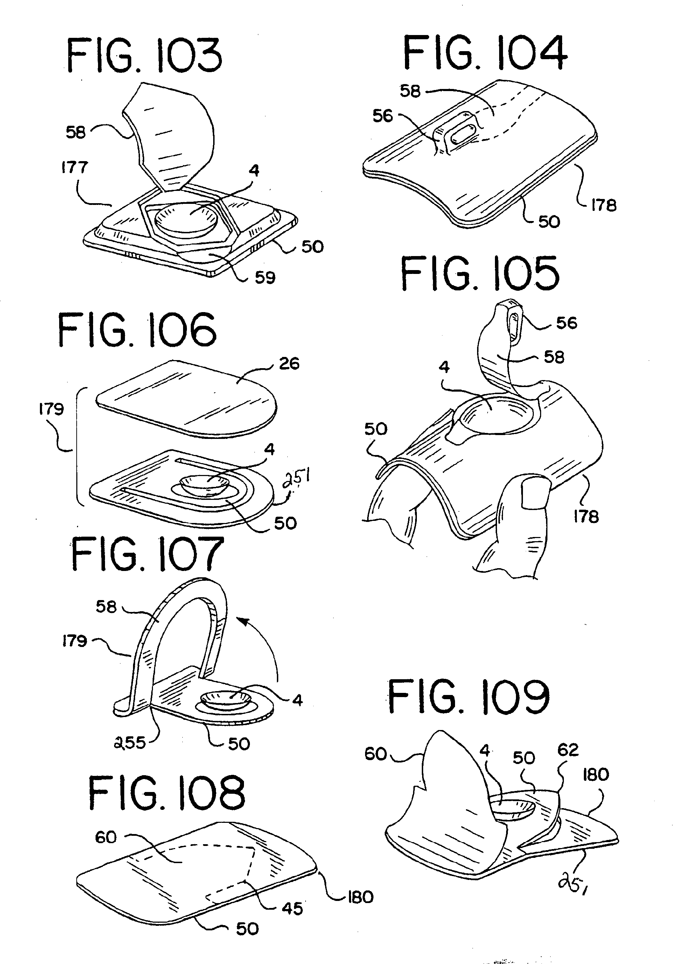

Referring to Figure 103, the single-use package 177 has a molded polypropylene base 50 and transparent polypropylene pull-top cover 58. In this the pull-top cover 58 is pulled back beginning at one corner where there is a portion of the pull-top cover 58 that is not adhered to the base 50, and is easily grasped. As the pull-top cover 58 is removed, the contact lens 4 therein is exposed.

A variation of the pull-top cover 58 of Figure 103 is shown in Figures 104-105. In this there is a raised handle 56 to aid in removal of the pull-top cover 58. As shown, once the pull-top cover 58 is pulled back, the base 50 is bent to allow access to the contact lens 4. Although the handle 56 is provided for ease of opening, for users with weak fingers, such as the elderly, it is possible to use a key tip, or some other device, to help grip the handle 56 and thus more easily open the single-use package 178.

In another example, a portion of the base folds 50 back with the cover 26. Referring to Figures 106-107, an elongated semi-circle shaped single-use package 179 is shown with a contact lens 4 and an aluminum cover sheet 26. The base 50 is an inner elongated semi-circle section that does not contact the peripheral section 251 except at the straight edge 255. To open this single-use package 179, both the outer peripheral section 251 and the aluminum cover 26 are peeled back to allow easy removal of the contact lens 4 therein.

In a variation of the single-use package 180 of Figure 108-109, there is a pointed edge 62 on the inner base section 50 that facilitates removal of the cover sheet 26. Although this single-use package 180 is shaped as a rounded rectangle, the inner section of the base 50 is in the shape of a pointed arch. Therefore, as the peripheral portion 251 is bent down slightly, the point 62 of the arch of the inner section pierces the cover sheet 60 and the sheet is pulled back along a predetermined path, such as along a relief. Such reliefs 45 are provided for easy opening and may be fancy cut, perforations, or semi-cut.

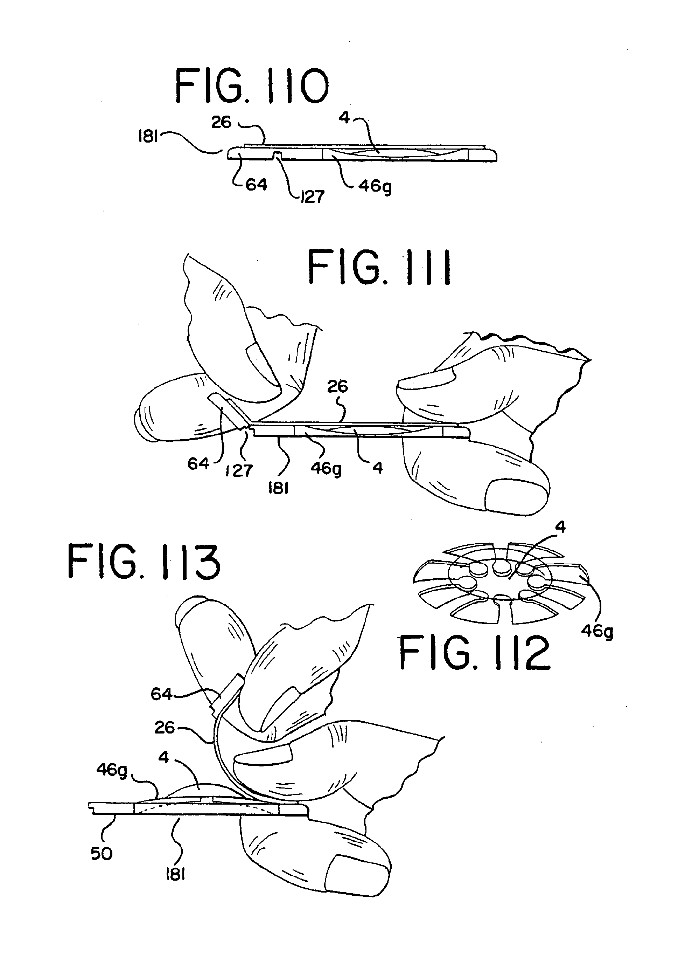

Shown in Figures 110-113, is the single-use package 181 with a polypropylene spring disc 46g, and the single-use package 181 has a tab 64 which snaps or breaks off of the main body of the pack via a hinge 127 so that the single-use package 181 may be opened. Once the connection between the tab 64 and the main body is broken, by snapping it upward, the protective covering 26 may be peeled away to expose the contact lens 4 and polypropylene spring disc 46g. As the restraint of the protective cover 26 is removed, the polypropylene spring disc 46g reverts to its equilibrated, arched state as does the contact lens 4 thereon. The contact lens 4 may thus be pinched off between thumb and forefinger and inserted into an eye of the wearer. In this example, the spring disc 46g is polypropylene; however, the spring disc 46g may be made from a variety of other materials known to those skilled in the art, such as any suitable polyolefin, silicones, polyamides, polyurethanes or other such approved materials.

In an additional example, the single-use package 182 is a retort-type package. Referring to Figure 114, there is shown a perspective view of a retort-type single-use package 182. The retort-type single-use package 182 comprises a layered, flexible envelope for holding a contact lens 4, which may be formed from one piece or two pieces of like or different flexible material. The retort-type single-use package 182 may be manufactured from a single piece of a flexible, laminated material which is strong enough to protect a lens held in a space formed in the package, but flexible enough to withstand forces due to a variety of applied loads such as, but not limited to, bending, folding, twisting, rolling or crushing. The wall of the package, which is preferably a homogenous material, does not necessarily conform to the shape of a lens but rather the lens "floats" in the package. Such "floating" is achieved by the fluid forces within the close confines of the package which support and buffer the lens from the surface of the package. There is little or no air within the package, and as such, any internal movement is minimized.

The retort-type single-use package 182 may be formed by folding a homogenous material back on itself and sealing the edges to form a sterile envelope. Alternatively, the retort-type single-use package 182 may be formed from two opposing pieces of homogenous material, in opposing relationship, that are heat sealed along the edges. Access to the lens is gained by dividing the retort-type single-use package 182 along one or more predetermined heat sealed edges.

In Figure 114, the retort-type single-use package 182 comprises first and second barrier layers 14 and 15 which may be formed by folding one layer or by jointing two separate barrier layers. The barrier layers 14 and 15 are heat sealed around edges 66, 68, 70, and 72. The heat sealing of edges 66-72 provides a boundary defining an internal space 74 in which a lens 4 is housed. The lens 4 is immersed in a predetermined, minimum amount of solution 48 which keeps the lens hydrated (see Figure 115). To release and expose the lens, barrier layer 15 may be peeled away from barrier layer 14. Alternatively, barrier layer 14 may be peeled away from barrier layer 15. To facilitate initial release of the barrier layers, a portion of the mating engagement between the layers is only lightly sealed, preferably at a corner to enable separation of the barrier layers. Figure 115 shows the retort-type single-use package 182 of Figure 114 tom open to release the lens 4.

According to one example, the barrier layers 14 and 15 are multi-layer laminates comprising materials which enable compliance with statutory requirements for lens packages. For example, a typical retort-type single-use package 182 material may comprise a polyethylene terepthelate (PET) layer, an aluminum layer and a polyolefin layer such as polypropylene. A thin layer of aluminum has properties such as inherent pliability and inhibition of oxygen transmission which make it a good material as part of the barrier wall composite.

A retort-type single-use package 182 of a predetermined size may be formed from barrier layers of the same or different materials. The retort-type single-use package 182 may be formed by folding a single piece of material back on itself to form the space for holding the lens. Alternatively, two separate pieces of the same or different material, in opposing engagement, are heat sealed at their edges. According to one example, the lamination profile of a barrier material may comprise an outer layer of 10 µ PET, a 50 µ aluminum layer, and a 50 µ polypropylene layer.

Turning now to Figure 116, a strip 41 of retort-type single-use packages 182 are held together by frangible joints 76. The retort-type single-use package 182 may be separated one at a time by tearing off at the joints 76. Also, the strips may be folded about joints 76 which contribute to efficient storage and packaging. Thus six to eight, and possibly more lenses could potentially be stored in the same space as two lenses using prior art blister packs 27.

In Figure 117, the strip of retort-type single-use packages 182 of Figure 116 is shown, including a hydrating solution pack 35 attached to the package 182 via a frangible joint 76. The solution pack 35 may be used by the consumer to hydrate the lens should supplementary lens hydration be required.

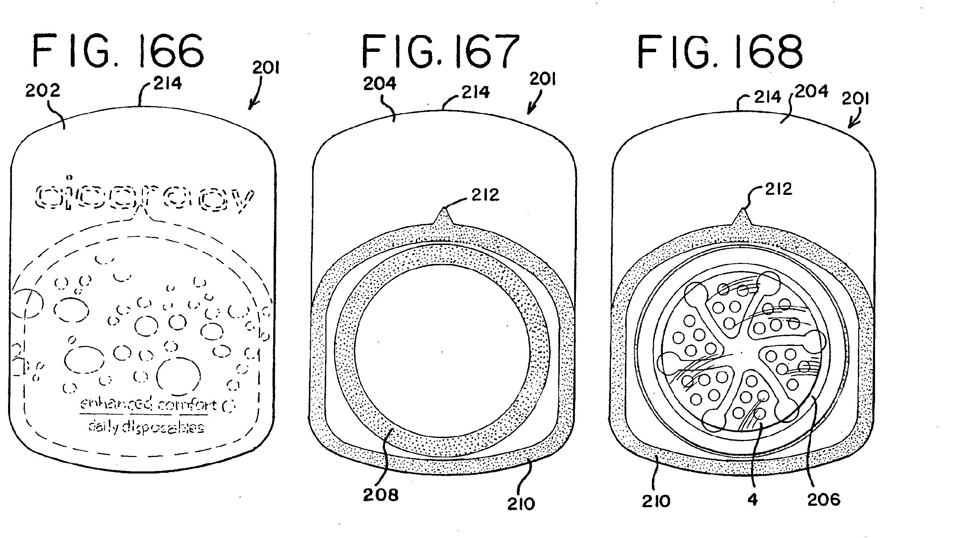

Another embodiment of a single-use package 201 is shown in Figures 166-171. In this embodiment, the package 201 is relatively flat, like package 169 shown in Figures 67-68. It may be made of two sheets of laminate material 202 and 204 and a spring disc 206. Of course the package 201 also includes a contact lens 4 and saline solution (not shown), and may be provided with decorative printing and other indicia on the outside of the front and back surfaces, such as the lens parameters. Instead of being made from two separate sheets, top sheet 202 and bottom sheet 204, the package 201 could be made from a single sheet folded over and trimmed to the shape shown. The spring disc 206 is preferably about 21 mm in diameter, about 0.5 mm thick in the outer ring structure and about 0.3 mm thick in the central leaf sections, with about six leaf sections as shown, each with numerous small holes through them.

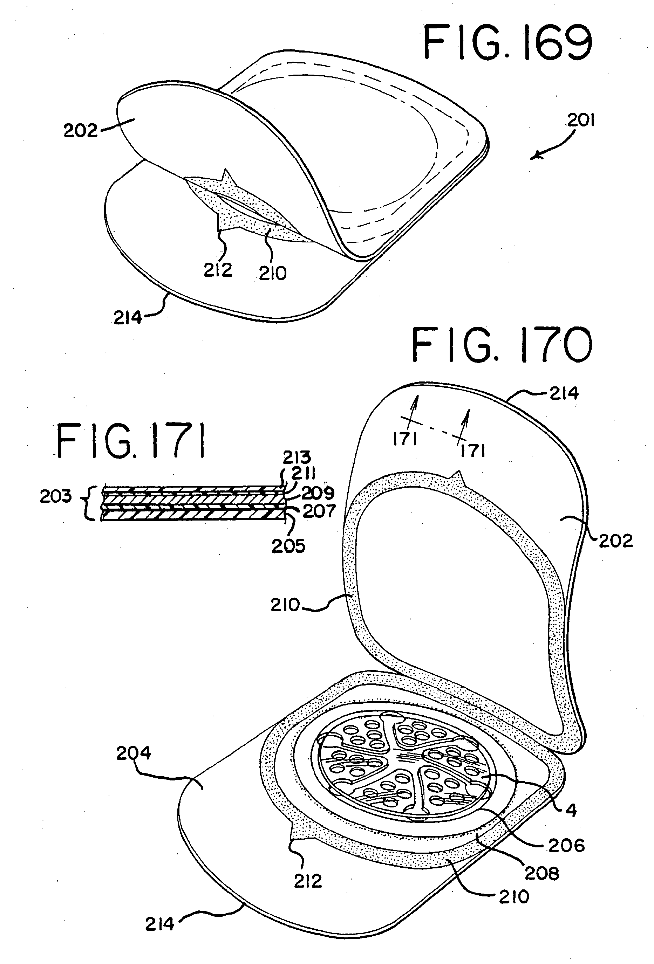

Package 201 is designed to be peeled open, and is made with an easy open peel seal having a shape that makes the initial force required to start opening the package about equal to the force required to continue to open the package. The package may be about 40 mm long and about 30 mm wide. The package is preferably made of a laminate material 203, best seen in Figure 171. A suitable laminate for the package 201 is available as an easy-peal film from Hosokawa Yoko CO. LTD., Tokyo, Japan. There are five layers in one embodiment of the laminate 203. The inner layer 205 is preferably a 35µ thick easy peel sealing material, such as polypropylene. The next layer 207 is preferably a 15µ polypropylene film, which is bonded to the first polypropylene layer. The third layer 209 is preferably a 35µ aluminum layer. The fourth layer 211 is preferably a 3µ reverse print layer. The outermost layer 213 is preferably a 12 µ PET layer. Of course the layers may be of different thicknesses to focus on different needs, and more or fewer layers could be used. For example, a co extruded polyurethane bonding material can be applied between layers 205 and 207, and between layers 207 and 209. Also, while a 35µ layer of aluminum is preferred, the aluminum layer could be as thin 7 µ and as thick as 70 µ. At a thickness of at least 15 µ, the aluminum helps act as an oxygen barrier. Another laminate may have a first layer of 35 µ easy-peal polypropylene, a bonding layer, a 12 µ PET layer, another bonding layer, 20 µ aluminum layer, another bonding layer and finally a 12 µ PET layer that may be printed on before it is laminated to the rest of the film. The bonding layer may be a dry lamination. The easy-peal polypropylene layer of course is on the inside of the package.

There are two seals made within the package 201. First, the spring disc 206 is sealed to the bottom sheet 204 at seal 208 (Figure 167). This seal is made with a strength such that the disc 206 stays affixed to the bottom sheet 204 when the package is opened. The top sheet 202 is sealed to the bottom sheet 204 with a peel seal 210. The peel seal 210 completely surrounds the disc 206 and provides the hermetic seal for the package 201. The seal 210 has a special shape with a lead-in section 212 in the form of a pointed area extending outwardly from the rest of the seal 210. The point 212 is directed toward the front side 214 of the package that will be opened first. As shown in Figure 169, the package 201 is opened by separating the two sheets 202 and 204 at the front side 214 of the package. The sheets are not sealed together at the front side (which means that both front corners are not sealed together), and thus are easily separated. As the top sheet 202 is peeled backward, the first part of the seal 210 that is encountered and pulled apart is the pointed lead-in section 212. As the top sheet 202 continues to be pulled back, the seal 210 continues to peel apart, creating an opening into the lens storage compartment. As shown in Figure 169, at this stage the peel seal 210 has been separated through its width in the area of the lead-in section 212, but the rest of the seal 210 is intact. The top sheet 202 continues to be peeled away until it reaches the position shown in Figure 170, fully opening the package and exposing the lens 4. As with other embodiments, as the package 201 is opened, the spring disc 206 pops up in its center to lift the lens 4 into a position where it can be easily picked up by the user.

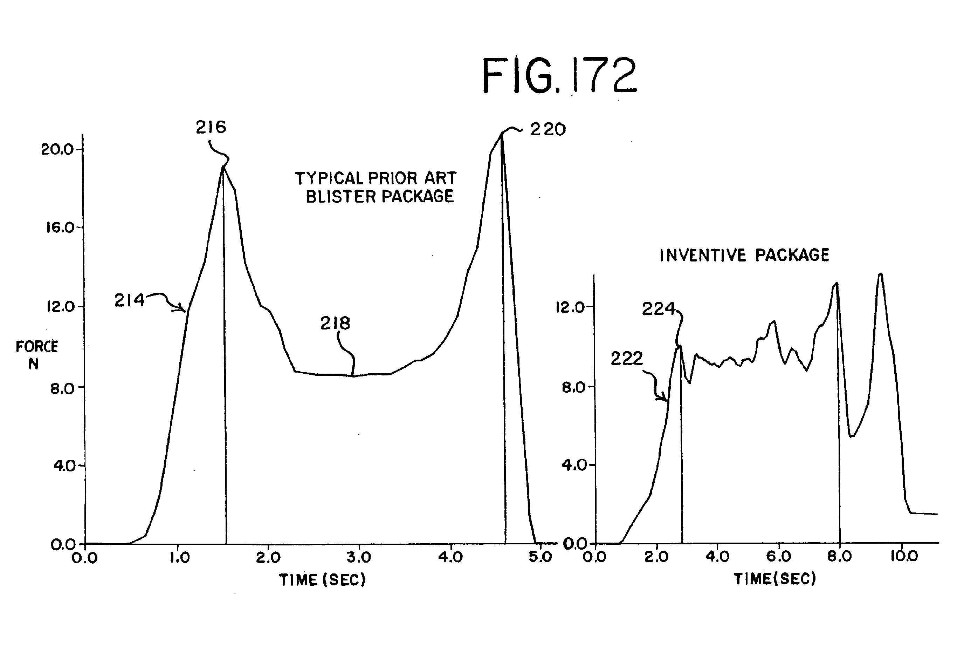

Figure 172 shows a graph of the force required to open a typical blister package and the package 201 as a function of time. These graphs depict the force applied as a package was opened using a constant-speed tension meter. The jaws gripping the sheets moved apart at a constant speed, and the force exerted was recorded. The line 214 shows the force required to open the seal of a typical blister pack, such as that shown in Figure 47. As the first part of the seal is encountered, the force reaches a peak 216. Thereafter the force required to continue to open the package dramatically decreases, reaching a low area 218 in the graph. Then, if the lid stock is completely removed, the force required reaches a second peak 220.

The peaks 216 and 220 are caused by the fact that in a typical blister pack seal, the shape of the seal is ring-shaped (much like the shape of seal 208 used to seal the spring disc 206 to the bottom sheet), and has a fairly constant radial thickness around the entire ring. Since the lid material is flexible, it is peeled back in a manner that the points between the lid material and the blister base where the package is opening forms a line that moves across the top of the package. The force required to open the package is proportional to the length of the section of that line that intersects with the peel area. Initially, the line will be tangential to the outside of the ring. As the package seal starts to be opened, however, the length of the intersecting line segment quickly increases to a maximum that is a function of the circumference of the ring and the radial thickness of the ring. Soon the line will move to a point where it has broken through the seal, and now intersects the seal in two different collinear line segments. However, the opening force starts to rapidly decrease as the package is opened further because the length of the intersecting line segments decrease as they approach the center of the seal. At that point the amount of seal that has to be opened is just two times the radial thickness of the seal, since the seal is being opened simultaneously on both sides of the seal. Then the force starts to increase again and reaches the peak 220 when the seal parting line again is across the back side of the seal. If the lid is completely removed, of course the force drops off rapidly as these is less and less seal area being separated.

The shape of the curve of line 214 is indicative of a real problem often encountered as people try to open prior art blister packages. They have to apply so much force to open the first part of the seal that when the seal starts to break through, if they do not quickly respond by reducing the force that they are applying, the rest of the seal quickly gives way and the blister pack, if not firmly held down on a countertop, ends up turning over and dumping out the lens hydrating solution and the lens contained in the package. After this happens to a user, they learn to open the seal by pulling the lid off in a rocking fashion so that the amount of force required can be more easily controlled.

The combination of the use of the Hosokawa laminate, plus the lead-in section 212 of the seal of package 201 provides a greatly improved force curve 222. As can be seen in the right side of Figure 172, the amount of force required to continue opening the seal 210 remains within a small range of the peak force 224. Preferably the peak force does not exceed 150% of the lowest force needed to open the remainder of the seal. It should be noticed that the peak pressure 224 required to open the seal depicted in the graph is significantly less than the peak 216 pressure required to open the prior art blister package. The period of time required to open the seal of the illustrated package was longer than the amount of time needed to open the prior art blister package because the length of the sealed area on the package was significantly larger in the illustrated package.

The force required to open the seal is a function of the seal area and shape, the materials sealed together, and, where a heat seal is used, the temperature and pressure applied to make the seal. The preferred seal is made with a pressure of about 6 bar, a dwell time of about 1 to 2.5 seconds and at a temperature of between 180 and 200°C. The preferred width of the seal areas 208 and 210 are both 2 mm.

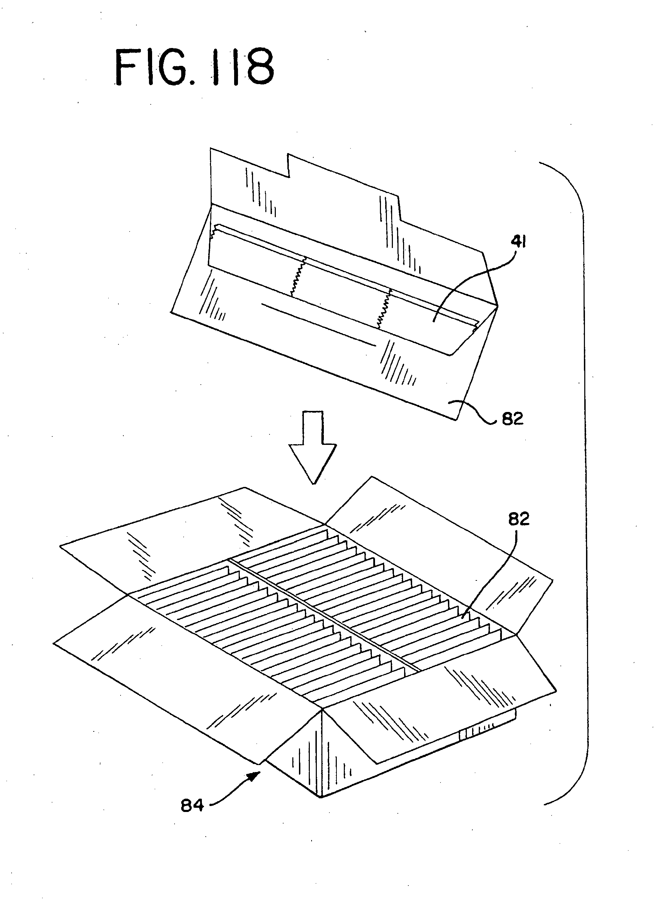

Figure 118 shows an exploded view of a carton 84 containing a large number of like envelopes 82 holding retort-type single-use package strips 41. Alternatively, the envelope may hold a plurality of individual retort-type single-use packages 182. It can be seen from this arrangement that a larger number of lenses may be stored per unit space compared to prior art packaging. Depending upon the tightness of the packaging, up to 10, and potentially more than 10 lenses may be stored in a space which would previously have been taken by two lens packages.

The form of retort-type single-use packages 182 described would preferably contain one soft contact lens each. The appropriate art work and statutory information may be printed on the external surfaces in a similar fashion to the current packaging.

The integrity of the lens in this retort-type single-use package 182 is preserved by a surrounding buffer of storage medium in the packet. The storage medium may act as a safety buffer if the lens package is subjected to rough or potentially damaging treatment. The current blister pack offers lens barrier protection through the use of an injection molded, preformed rigid boat. However, the conventional blister package also includes an aluminum foil cover that bridges the opening to the blister pack. The unsupported foil offers no additional protection, and on the foil side, potentially less protection than a retort-type single-use package that has two flexible barrier layers that respond more favorably to applied loads. In fact, the aluminum surface of the blister packs can be more easily punctured due to it's tightness over the polypropylene boat. The retort-type single-use package is inherently soft and can deflect potential punctures by moving with the puncturing object.

The retort-type single-use package 182 allows for a sufficient minimum amount of solution for maintenance of hydration and does not require that the lens swim in hydrating solution as in the prior art packages.

In the retort-type single-use package 182 excess hydration maintenance fluid may be forced out during the manufacturing process, leaving a predetermined minimum amount of solution or gel to keep the lens hydrated. Due to the optimal sealing qualities of the retort-type single-use package 182, no vapor will escape from the internal space. The flatness of the package barrier layers will facilitate sticking of the lens to one or other of the internal surfaces providing the advantage that when a layer is peeled back to expose the lens inside, the lens will be stuck to an inner surface which ensures that the lens will not drop out during opening.

The manufacturing of disposable lenses becomes more cost effective as the cost of packaging the lens is reduced and the efficiency of sealing and subsequent sterilization is improved. Patients will be more likely to consider the lens a disposable item in the packaging of the present invention. Further, it takes up far less space and can be packaged in a more appealing fashion. This type of packaging especially suits daily disposable lenses as the cost component of this type of packaging is attractive to both consumers and manufacturers.

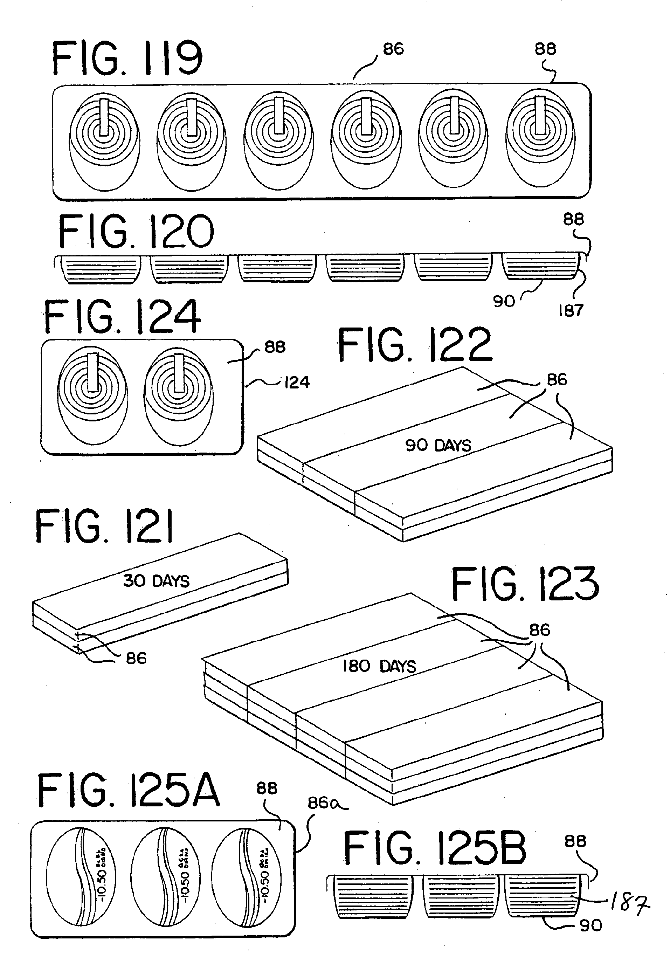

A variety of secondary packaging 86 configurations are possible with the single-use package as illustrated in Figures 119-164. One advantage of the single-use package is that a variety of secondary packaging options are available. In addition, the space required to package a plurality of single-use packages is far less than that of the traditional blister packs. For instance, in Figures 119-120, a package of 30 single-use packages 187 is shown. There are five single-use packages 187 in each of the six compartments 90 sealed with a cover sheet 88, such as vacuum formed PET. The compartments 90 are connected by the cover sheet 88 as shown in Figure 120. Two of such packages 86 may be combined to provide a 30 day supply of contact lenses (that is, a total of 60 lenses) (Figure 121). In this example, the 30 day supply is only 270 x 60 x 12 mm. A 90 day supply of lenses (Figure 122) is only 270 x 180 x 12 mm and a package with a 180 day supply (Figure 123) is 270 x 240 x 20mm. The dimensions for the 30, 90 and 180 packs may vary as in the following non-limiting examples. A 30 day supply package may be 300 x 60 x 12 mm, or 255 x 60 x 13 mm, or 250 x 60 x 13 mm, or 245 x 60 x 13 mm, or even 240 x 55 x 13 mm. A 90 day supply pack may be 300 x 180 x 12 mm, or 255 x 180 x 13 mm, or 250 x 180 x 13 mm, or 245 x 180 x 13 mm, or even 240 x 165 x 13. A 180 day supply pack may be 300 x 240 x 20 mm, or 255 x 240 x 20 mm, 250 x 240 x 20 mm, or 245 x 240 x 20 mm, or even 240 x 220 x 20 mm.

In Figure 124, a secondary package 124 for two single-use contact lens packages is illustrated. In this example, two contact lens packages are packaged in a compact secondary package that is roughly the size of a business card, about 2 inches by about 3 ½ inches (about 50 mm by about 90 mm). This is particularly useful when traveling.

In Figures 125A and 125B, there is a secondary package 86a for 30 single-use packages 187 with three compartments 90 holding 10 single-use packages 187 each. The compartments 90 are held together by a cover sheet 88. The package 86a is extremely compact, measuring 130 x 60 x 11 mm.

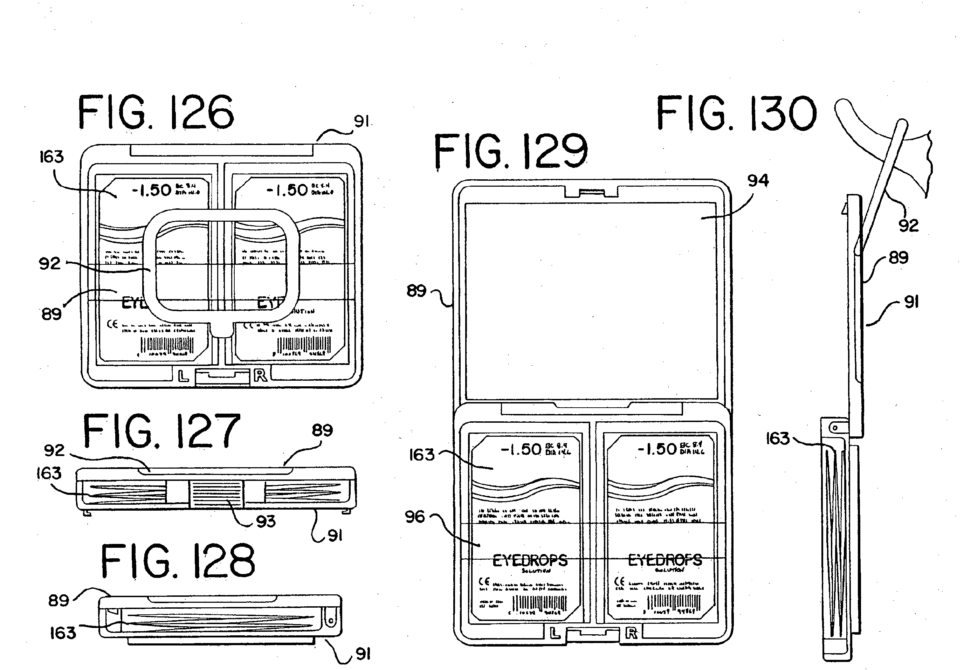

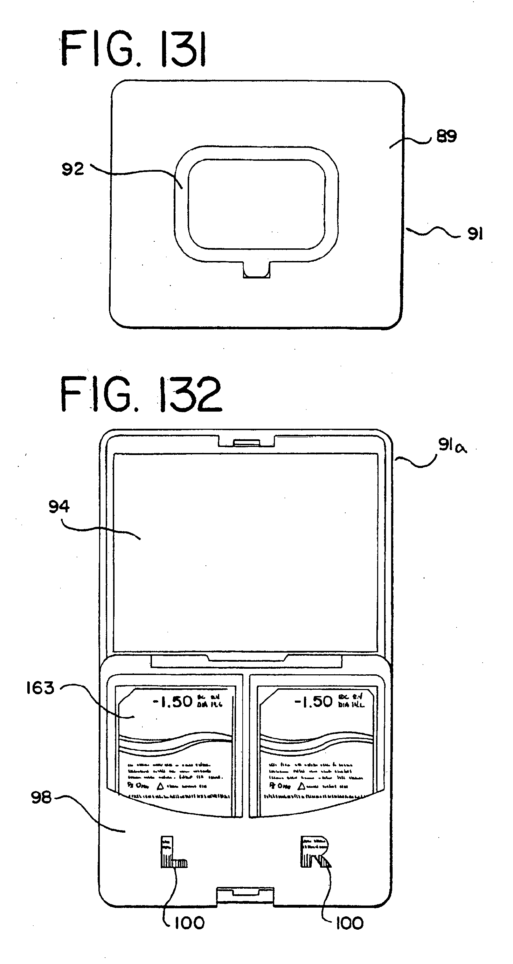

In one example, a handbag kit or travel pack 91 is provided for a plurality of single-use packages 163, as seen in Figures 126-133 and 135-136. The single-use packages therein may be individual single-use packages or strips of single-use packages folded in zigzag fashion. The travel pack 91 is composed of transparent or opaque (Figure 131) material. The travel pack may be opened by pressing a release button 93 and flipping the top 89 up. The travel pack may have a mirror 94 inside to provide a traveling user the ability to insert his contact lenses any place at any time. Further, the handle 92 of the travel pack 91 provides a means for hanging the travel pack, for example, on a hook (see Figure 130) such that the travel pack 91 is at eye level or stored in a safe place. The single-use packages 163 are held in the travel pack 91 by a sliding guide 96 to prevent the single-use packages 163 from falling out, as in Figure 129. Alternatively the single-use packages 163 are held in compartments 98 as shown in Figure 132, which may optionally display left and right indicia 100.

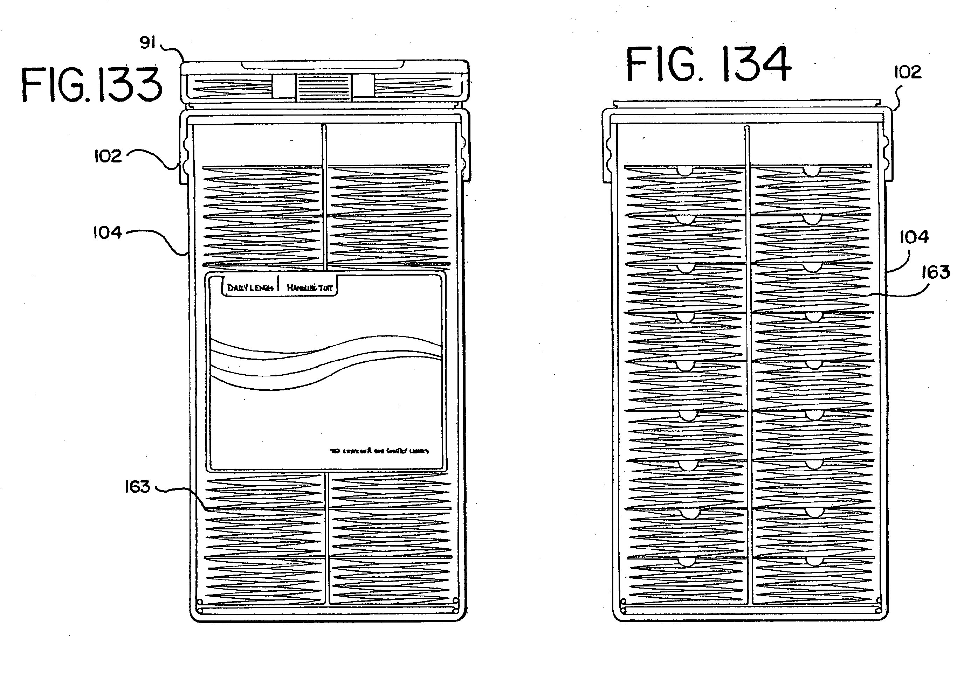

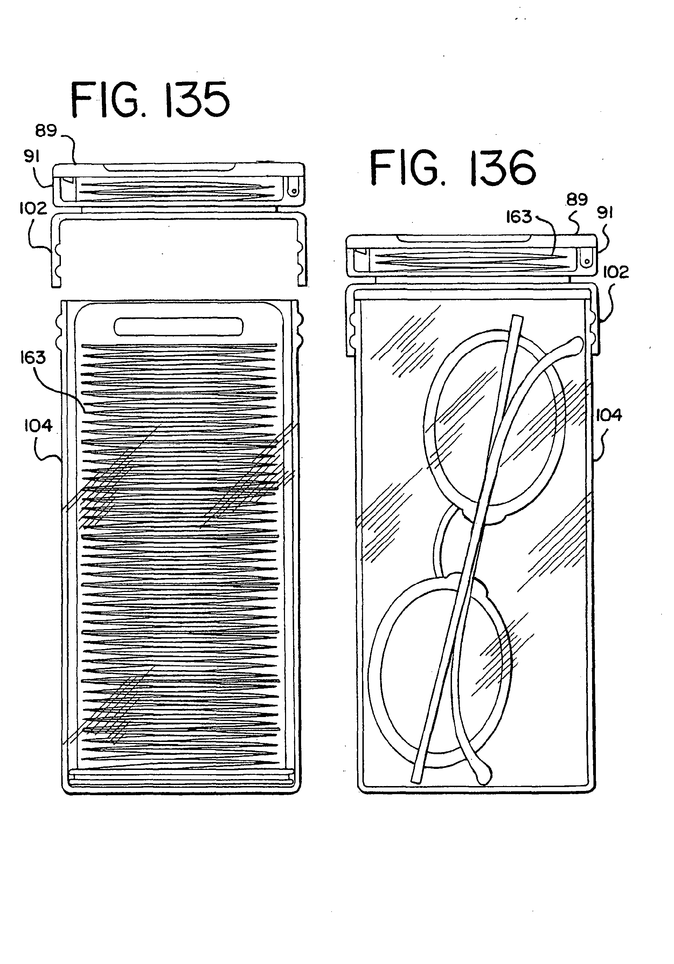

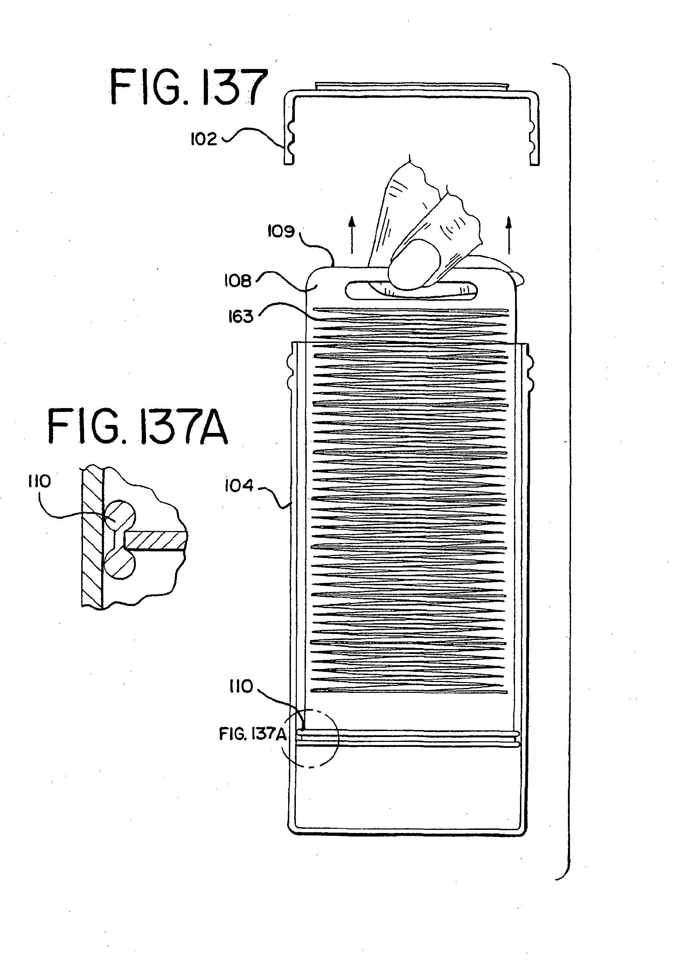

In another example, the secondary packaging provides a 90 day supply of single-use packages 163 as in Figure 133-135. Figures 133-134 show a front view of the 90 day package and Figures 135 and 137 provide a side view. The 90 day package 104 holds the single-use packages 163 (either individual or strips folded in zigzag fashion) in a stacked arrangement and has a cover 102 attached that may optionally hold a travel pack 91 (Figure 133) as described above. As shown in Figures 133 and 135, the travel pack 91 may slide onto the cover 102 of the 90 day package 104. In addition, when the 90 day package is emptied, the package 104 may be used as a sunglass case (see Figure 136). The travel pack 91 may attach to the cover 102 and thus a combination travel pack 91 and sunglass case 104 is provided.

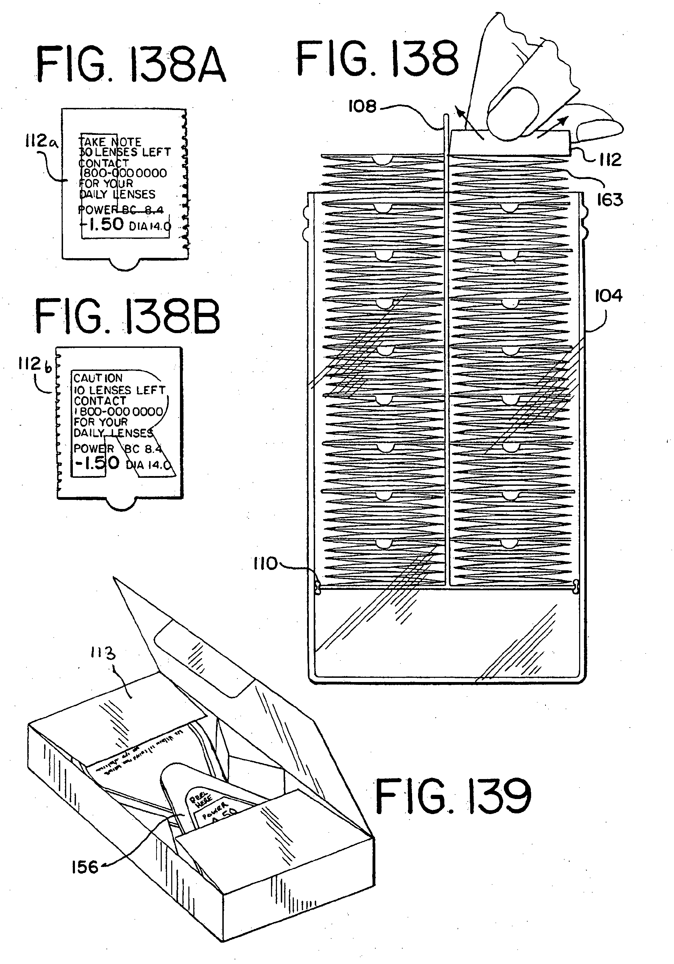

Figure 137 illustrates a 90 day package 104 with a removable insert 108. After removal of the cover 102, the insert 108 may be lifted out of the 90 day package 104 by the handle 109 provided. As shown in Figure 137A, an anti-slip rubber stopper 110 prevents the insert 108 from sliding back into the 90 day package when the user lets go of the handle 108, such as when the user is removing a single-use contact lens package 163. In Figure 138, tabs 112 are provided at regular intervals within the stack of single-use packages 163 to alert the user to diminishing supplies. For instance, a tab 112a (138A) may indicate that there are only 30 contact lenses remaining in the 90 day package. Re-ordering information as well as prescription information may be included on the tab 112b (Figure 138B) to aid the user in purchasing additional contact lenses. Alternatively, the tab 112 may indicate that there are only 10 lenses remaining. Although 10 and 30 lenses are used as an example, the tabs 112 may be placed at any interval that would be useful to the contact lens wearer.

In Figure 139, the secondary packaging 113 for the single-use package 156 is a rectangular container or box with a low profile. The height of the container 113 need not be very high, as the single-use packages 156 within are slim and compactly stacked. As assembled, the container 113 securely holds a plurality of single-use packages 156 while taking up minimal space. Alternatively, the secondary packaging 113 may be square, round, oval or any other shape conducive to holding a plurality of single-use packages 156.

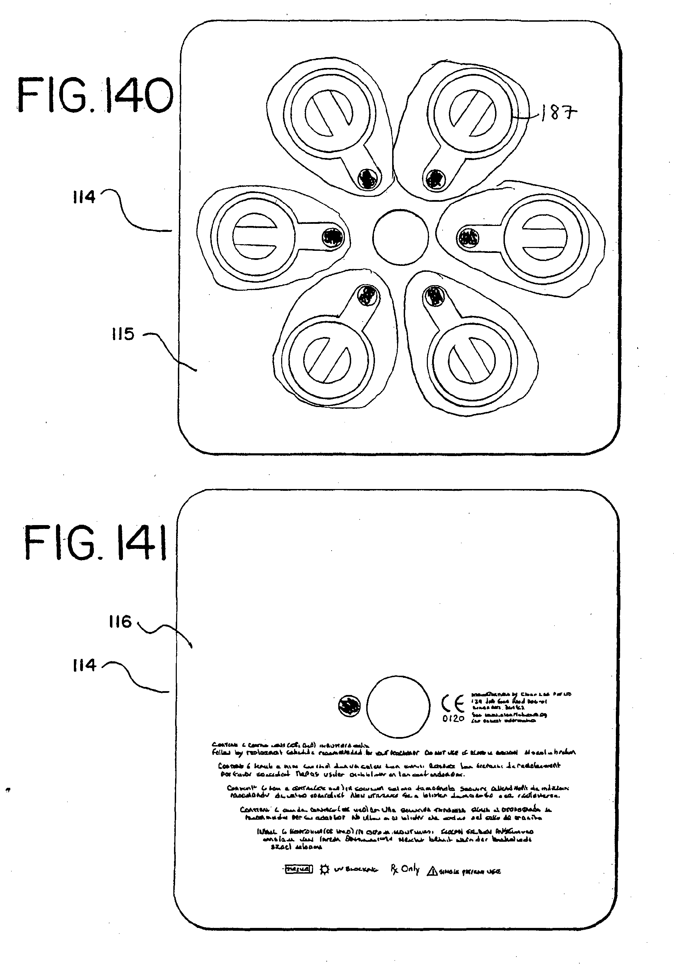

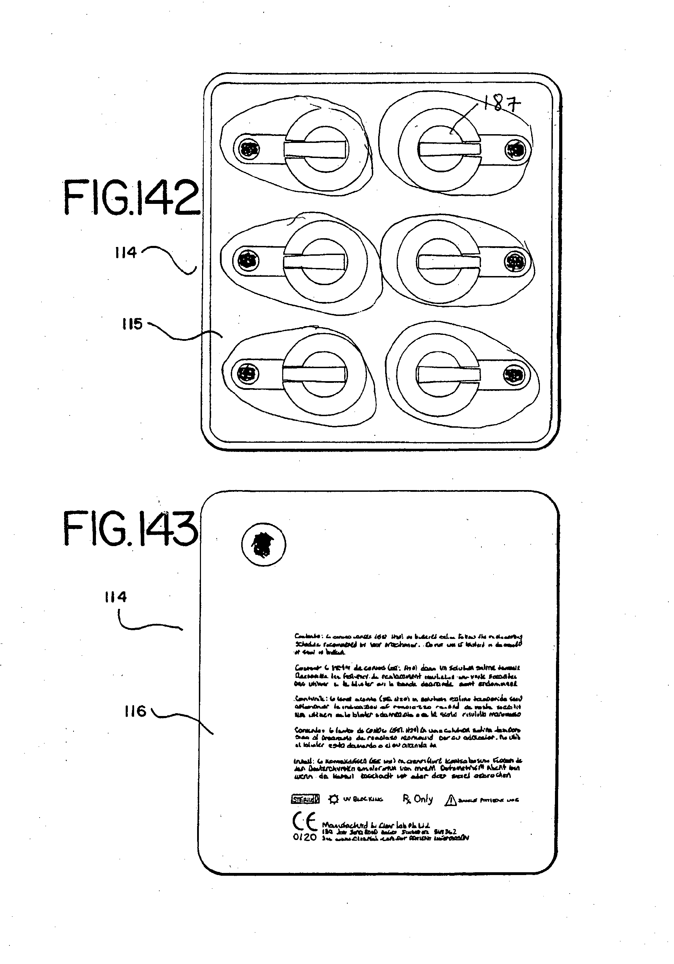

In Figures 140-143, the single-use packages are affixed to a holder sheet 114 and subsequently placed in a secondary packaging container. A plurality of single-use packages 187 may be affixed to a single holder sheet 114, and all of the single-use packages 187 on a given holder sheet contain lenses of a single prescription. The single-use packages 187 may be affixed in a circular arrangement, as seen in Figures 140-141. Alternatively, the single-use packages 187 may be arranged in parallel rows as in Figures 142-143. Optionally, artwork of any variety may be displayed on the front 115 of the holder sheet in addition to manufacture, prescription, regulatory, and instructional information which may optionally be displayed on the back 116.

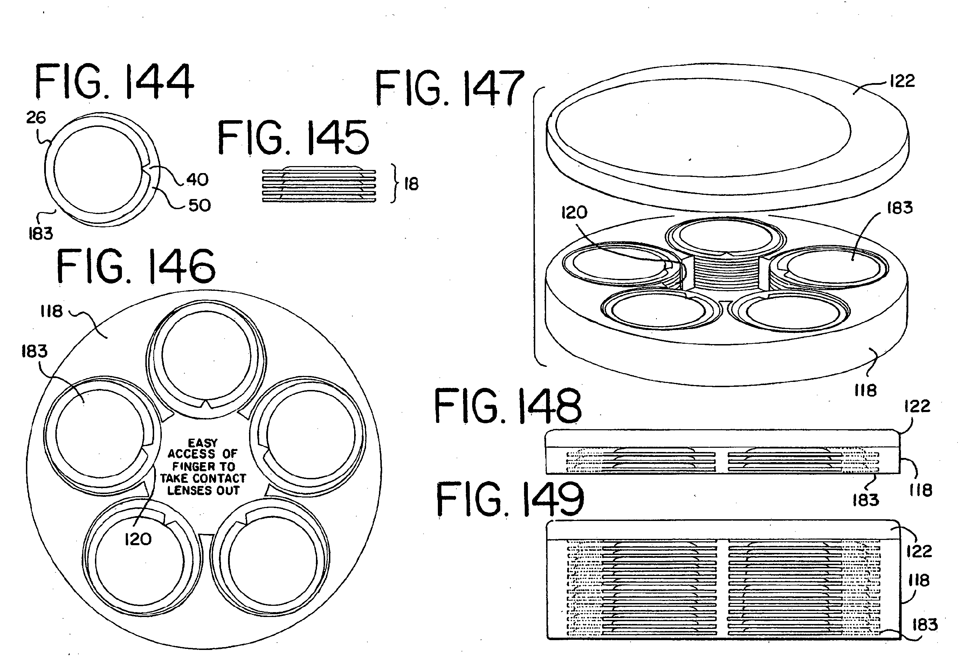

The single-use package 183 may be a blister-type package that may be stacked and housed in a circular configuration in circular secondary packaging, as shown in Figures 144-148. The blister-type single-use package 183 is made from a suitable injection molded plastic material. Each blister-type single-use package has a slim profile and maintains the contact lens therein in a flattened state that is less that the sagittal depth of the equilibrated contact lens. When stacked, the blister-type single-use packages stack compactly and take up minimal space. The stacks may then be housed in a circular configuration in a secondary package base 118 with an open center 120 for easy access to the single-use packages. In this arrangement, it is easy for the user to place a finger in the center 120 and remove one or more single-use packages 183 from the circular secondary packaging 118. The circular secondary packaging has a base 118 as well as a lid 122 for securely housing the single-use packages 183 therein.

The circular secondary packaging 118 may house a 30 day supply, or a 90 day supply of contact lenses. Alternatively (Figure 149), the circular secondary packaging 118 may house between 30 and 90 day supply of contact lenses or even between 90 and 180 day supply.

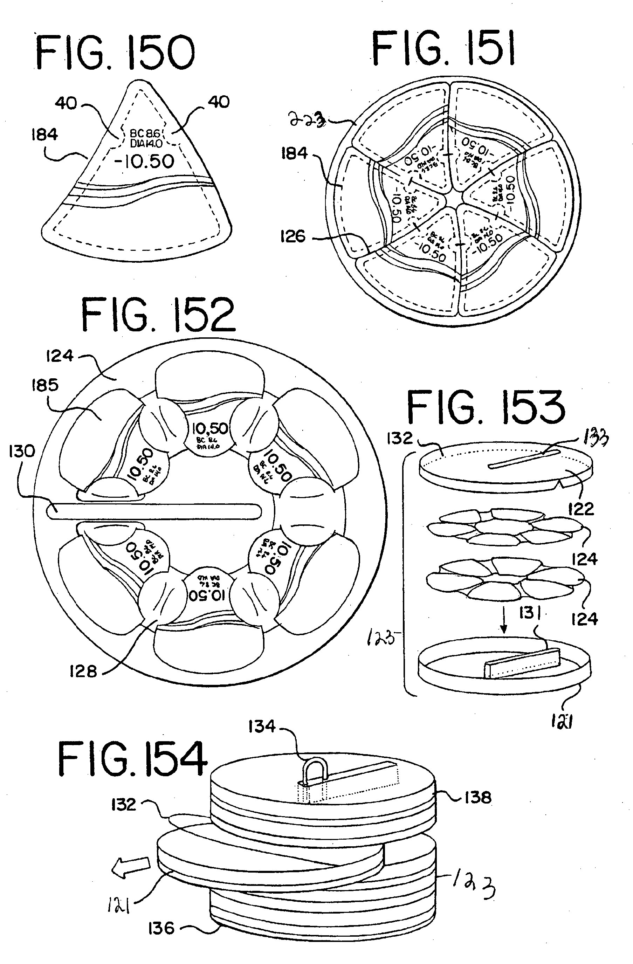

In another example, the single-use package 184 is an asymmetrical rounded triangle with one or more tear notches 40, as shown in Figure 150. This particular single-use package 184 may be packaged on a disc 223 held by small tabs 126, in a set of six or more in a circular arrangement as shown in Figure 151.

An alternative is shown in Figures 152-154. The single-use package 185 is a rounded triangle that resembles the shape of a guitar pick. The single-use packages 185 are held in place on a round holder sheet 124 by clipping means 128. Thus, individual single-use packages 185 may be easily removed from the sheet 124 by sliding the single-use package 185 off of the sheet 124. A plurality of single-use package holder sheets 124 may be placed in a box 123 that holds 10 or more single-use package holder sheets 124. More preferably, the box 123 will hold 20, 30 or more single-use package holder sheets 124. The box 123 containing a plurality of single-use package holder sheets 124 has a narrow open guide 131 that matches up with slot 130 in the sheet 124. The lid 122 of box 123 also includes a slot 133. This open slot 133 extends from the center of the box 123 to the periphery but does not extend all the way to the perimeter. The lid 122 of the box 123 has a hinged section 132 across the diameter of the box 123 attached to base 121. This hinged section lifts up from the perimeter toward the center. There is also provided a stand 136 (Figure 136) upon which a plurality of the boxes 123 containing single-use package holder sheets 124 may be stored. As shown, the stand 136 is a base with a central extension 134 that slides into open slot 130 of the single-use package holder sheets 124 and open guide 131 of box 123. When one or more boxes 123 containing single-use package holder sheets 124 is placed on the stand 136, the boxes 123 may be slid horizontally along the length of the guide 131. Therefore, as shown, a box 123 that is beneath another like box 123 may slide out without being removed from the stand 136. Access to the contents of the box 123 may be easily gained by opening the hinged section 132 of lid 122, and then the box 123 may be replaced in its original position. Contact lenses for both the right and left eye may be stored on the same stand 136. For instance, contact lenses for the left eye may be stored in the bottom boxes and contact lenses for the right eye may be stored in the top boxes. Alternatively, boxes may be stacked such that contact lenses for the right and left eyes alternate. In one embodiment, it is preferable that the boxes currently in use be on the top of the stack of boxes stored on the stand 136. This is because as each holder sheet 124 is emptied, the box 123 must be removed from the stand 136 so that the sheet 124 may be removed from the box 123 and access to a subsequent holder sheet 124 with a plurality of single-use packages 185 may be gained. Alternatively the open slot 130 in the holder sheet 124 may extend all the way to the perimeter of the sheet 124 thereby allowing the sheet 124 to be removed from the box 123 without the need to remove the box 123 from the stand 136.

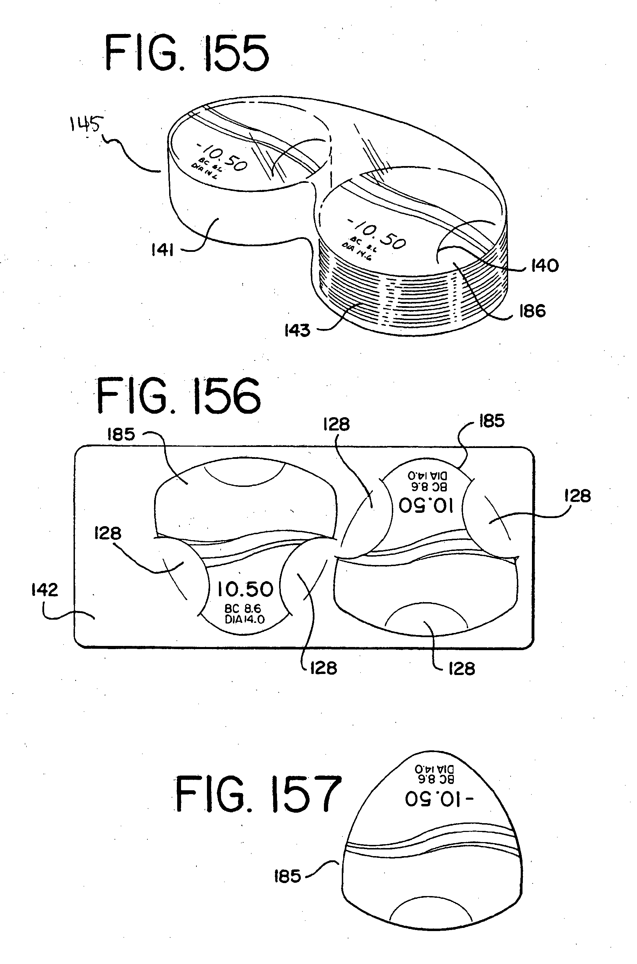

In Figure 155, round single-use packages 186 are held in a secondary package 145 that is shaped like an eye-mask. A plurality of single-use packages may be held in each compartment 141 and 143 of the package 145. The single-use packages 186 of this figure have a semicircular indentation 140. This indentation 140 provides a place for the user to grasp the single-use package 186 and remove it from the secondary packaging 145. The eye-mask shaped package 145 may be transparent or opaque and may display left and right indicia.

Figures 156-157 show a card 142 with two single-use packages 185 thereon. The single-use package 185 is fastened by clipping means 128 onto a single-use package carrying card 142. In this instance, the card 142 holds two rounded triangular shaped single-use packages 185. However, the number of single-use packages 185 as well as the shape of the single-use packages 185 may vary. Although the single-use packages in this example are attached to the single-use package holder card via clipping means, the single-use packages may also be attached with other forms such as adhesive or alternatively, insertion slots into which the corners of the single-use package may slide.

Advantageously, the card 142 with two single-use packages 185 clipped thereon may hold one left and one right daily use lens. Thus, a one day supply of lenses may be easily and compactly transported in a purse, wallet or pocket, as the card 142 is roughly the size of a business card. Optionally, a plurality of two single-use package carrying cards 142 may be packaged in a container for delivery to the user. The container may contain 10, 20, 30, 90 or a 180 day supply of lenses.

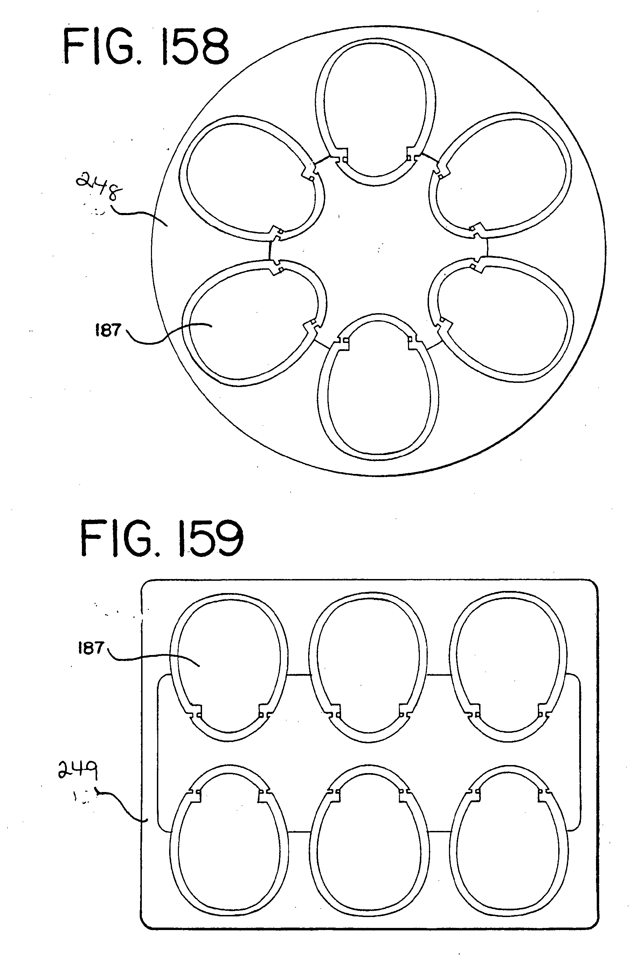

Figures 158-159 illustrate variations of the secondary package 114 of Figure 146 that are possible with the single-use package 187. A variety of differently shaped single-use packages 187 may be compactly packaged in a variety of configurations with minimal space required. In Figure 158, six single-use packages 187 are attached to a round holder sheet 248. In Figure 159, six single-use packages 187 are attached to a rectangular holder sheet 249. Both holder sheet 248 and 249 include central openings therein, like opening 120 in Figure 146, to allow a user to remove one of the packages 187 from the holder sheet.

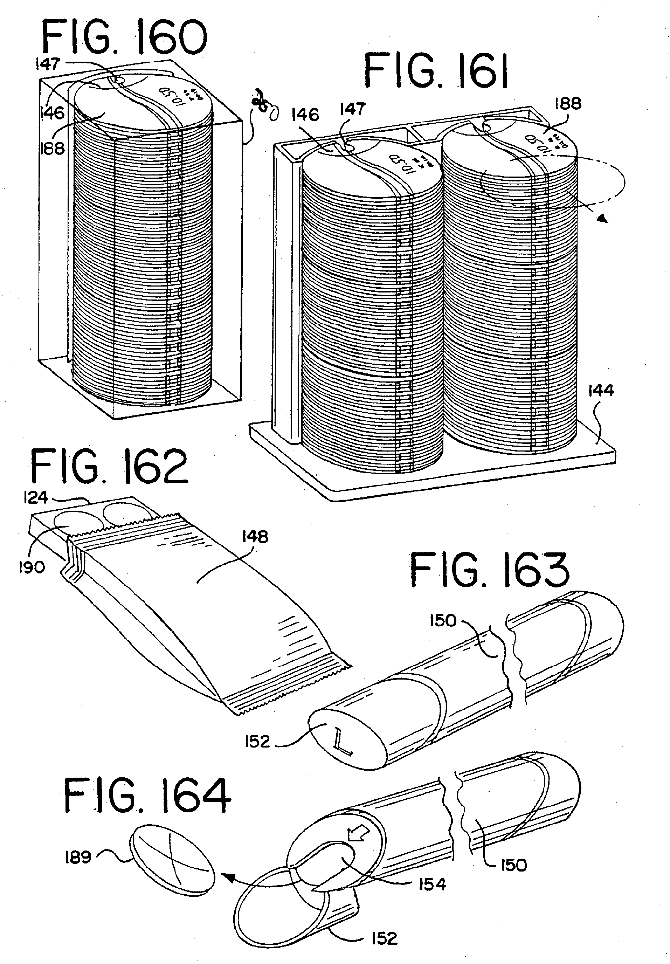

Referring to Figure 160, a secondary packaging box 250 is provided for a plurality of circular single-use packages 188. The circular single-use packages have a section of the perimeter that is folded inwardly to form an opening 146 into which a clip 147 may fit and hold the single-use packages in place. A storage stand 144 is provided in Figure 161 which consists of a base and a wall that is at approximately a right angle to the base. The plurality of circular single-use packages may be transferred from the secondary packaging box 250 of Figure 160 and clipped or snapped onto the stand 144 for storage of a 90 day supply of contact lenses. Single-use packages 188 may be removed from the stand 144 as needed. As shown, there are two stacks of single-use packages 188 on the stand 144. Therefore, one stack may hold single-use packages 188 containing a prescription contact lens for the left eye and one stack may hold packages containing contact lenses suited to the right eye. The stand may be reusable or disposable and may store greater or less than a 90 day supply of lenses.

A delivery package is shown in Figure 162. A plurality of single-use packages 190 may be inserted into an envelope 148 for shipping. Preferably, the envelope 148 is a sealed aluminum-coated bag filled with nitrogen gas to act a cushion. The packages 190 may be adhered to sheets or the packages themselves may be perforated portions of a larger sheet 124

A single-use package dispensing case is illustrated in Figures 163-164. The dispensing case 150 opens from both ends to dispense single-use packages 189. For instance, one end dispenses single-use packages 189 containing contact lenses for the left eye and the opposite end dispenses single-use packages 189 containing contact lenses for the right eye. The dispensing case 150 is a cylinder and the single-use packages 189 therein are stacked on an angle such that when a cap 152 is opened, a single-use package 189 may be easily accessed by applying pressure to the removal area 154 and sliding a single-use package 189 from the dispenser 150. The caps 152 may display left and right indicia, prescription information, etc. The dispensing case 150 may be refillable or alternatively disposable.

A storage container 252 containing a plurality of single-use contact lens packages 258 is shown in Figure 165. The storage container 252 has a lid 254 and a storage compartment 256. The single-use contact lens packages 258 are stacked within the storage compartment 256 such that they interfit with one another like stacked spoons. That is, the convex surface 260 of a first single-use contact lens package 258 rests upon the concave 262 surface of a second single- use contact lens package 264 when stacked on top of each other.

It will be recognized by persons skilled in the art that numerous variations and modifications may be made to the invention without departing from the overall scope of the invention as defined by the appended claims. For example, the materials discussed herein are capable of autoclave sterilization. Other materials may be used when other means of sterilization are utilized.

## Claims

1. A single-use package with a contact lens (4) therein, wherein the package has an internal depth which is less than the overall sagittal depth of the contact lens (4) when the contact lens (4) is in its equilibrated state, **characterised in that** the contact lens (4) is maintained in the package with a sagittal depth less than the sagittal depth of the contact lens (4) when the contact lens (4) is in its equilibrated state.

2. The package of claim 1 wherein the contact lens (4) is confined in the package such that it is always maintained in the same orientation while inside the package and wherein the contact lens is in a flattened state.

3. The package of any one of claim 1 or claim 2 further comprising a protuberance (42) upon which the contact lens (4) rests within the package.

4. The package of claim 3 wherein the protuberance is an inflexible mound.

5. The package of claim 4 wherein the contact lens (4) is held immobilized between the protuberance (42) and a cover sheet (26).

## Patentansprüche

1. Einzelgebrauchspackung mit einer Kontaktlinse (4) darin, wobei die Packung eine inwendige Tiefe aufweist, die geringer ist als die Gesamtsagittaltiefe der Kontaktlinse (4), wenn sich die Kontaktlinse (4) in ihrem gleichgewichtigen Zustand befindet, **dadurch gekennzeichnet, dass** die Kontaktlinse (4) mit einer Sagittaltiefe in der Packung gehalten wird, die geringer ist als die Sagittaltiefe der Kontaktlinse (4), wenn sich die Kontaktlinse (4) in ihrem gleichgewichtigen Zustand befindet.

2. Packung nach Anspruch 1, wobei die Kontaktlinse (4) derart in der Packung eingeengt ist, dass sie immer in derselben Orientierung gehalten wird, während sie sich in der Packung befindet und wobei sich die Kontaktlinse in einem flachgedrückten Zustand befindet.

3. Packung nach einem von Anspruch 1 oder Anspruch 2, weiter umfassend eine Erhebung (42), auf der die Kontaktlinse (4) in der Packung liegt.

4. Packung nach Anspruch 3, wobei es sich bei der Erhebung um einen unnachgiebigen Höcker handelt.

5. Packung nach Anspruch 4, wobei die Kontaktlinse (4) unbeweglich zwischen der Erhebung (42) und einem Deckbogen (26) gehalten wird.

## Revendications

1. Conditionnement à usage unique renfermant une lentille de contact (4), le conditionnement ayant une profondeur interne inférieure à la profondeur sagittale globale de la lentille de contact (4) quand la lentille de contact (4) est dans son état équilibré, **caractérisé en ce que** la lentille de contact (4) est maintenue dans le conditionnement d'une profondeur sagittale inférieure à la profondeur sagittale de la lentille de contact (4) quand la lentille de contact (4) est dans son état équilibré.

2. Conditionnement selon la revendication 1, dans lequel la lentille de contact (4) est confinée dans le conditionnement de façon à toujours être maintenue dans le même sens lorsqu'elle se trouve dans le conditionnement et dans lequel la lentille de contact est dans un état aplati.

3. Conditionnement selon l'une quelconque de la revendication 1 ou de la revendication 2, comprenant en outre une protubérance (42) sur laquelle repose la lentille de contact (4) dans le conditionnement.

4. Conditionnement selon la revendication 3, dans lequel la protubérance est une bosse rigide.

5. Conditionnement selon la revendication 4, dans lequel la lentille de contact (4) est maintenue immobilisée entre la protubérance (42) et une feuille de couverture (26).
